# EUROPEAN PATENT SPECIFICATION

(11) **EP 3 822 605 B1**
(45) Date of publication and mention of the grant of the patent: **07.06.2023**
(21) Application number: 19833867.5
(22) Date of filing: 11.07.2019
(51) Int. Cl.: G01L 5/00, F16C 19/52, F16C 23/06, F16C 41/00, F16C 19/54, F16C 25/06, F16C 33/66, F16C 35/12, F16C 19/16, F16C 19/18

(54) **BEARING DEVICE AND MACHINE TOOL SPINDLE APPARATUS**
LAGERVORRICHTUNG UND WERKZEUGMASCHINENSPINDELEINRICHTUNG
DISPOSITIF DE PALIERS ET APPAREIL À BROCHE DE MACHINE-OUTIL

(30) Priority: 11.07.2018 JP 2018131257; 13.03.2019 WO PCT/JP2019/010372
(43) Date of publication of application: 19.05.2021
(73) Proprietor: NSK LTD., Shinagawa-Ku Tokyo 141-8560 (JP)
(72) Inventor: KENMOCHI, Kenta, Fujisawa-shi, Kanagawa 251-8501 (JP); KATSUNO, Yoshiaki, Fujisawa-shi, Kanagawa 251-8501 (JP)
(74) Representative: Global IP Europe Patentanwaltskanzlei
(86) International application number: PCT/JP2019/027504
(87) International publication number: WO 2020/013277

(56) References cited:
- EP-A1- 2 308 635
- DE-A1- 2 352 788
- JP-A- 2000 110 836
- JP-A- 2002 061 750
- JP-A- 2008 082 425
- JP-A- 2009 061 571
- JP-A- 2010 217 167
- JP-A- 2015 087 179
- JP-A- 2015 087 179
- JP-A- 2016 169 946
- KR-A- 20070 041 194
- US-A1- 2002 102 040

## Description

### TECHNICAL FIELD

The present invention relates to a bearing device and a spindle apparatus of a machine tool, and more particularly to a bearing device that can detect an axial direction displacement of a rotary shaft supported by rolling bearings and measure a shaft load, and a machine tool spindle apparatus that can detect the axial displacement of the rotary shaft supported by the rolling bearings and measure the shaft load.

### BACKGROUND ART

In a field of a spindle of a machine tool, there is an increasing trend that a cutting load should be controlled to achieve faster machining, higher accuracy of the machining, and longer life of bearings. One of the solutions is measuring the shaft load during operation of the machine tool, and the need for such solution is increasing.

Techniques for measuring the shaft load during operation of such machine tools have been numerously proposed. Among them, a technique for measuring an amount of shaft displacement in an axial direction, and multiplying the shaft displacement by a rigidity value of the bearing or the like to calculate the shaft load, rather than directly measuring the shaft load, as described in Patent Literature Document 1 (Japanese Patent Application Laid-Open Publication No. 2010-217167), has drawn attention.

In addition to the above-mentioned prior art, there are a plurality of displacement sensors of the non-contact type applicable to the measurement of displacement of the rotating body, such as a laser displacement sensor, an eddy current displacement sensor, and a capacitive displacement sensor.

Further, Patent Literature Document 2 (Japanese Patent No. 3662741) teaches a technique to measure the rotor displacement of the hydrostatic magnetic composite bearing, which can support the shaft with a magnetic bearing and a hydrostatic gas bearing, and control the current supplied to the coil of the magnetic bearing. The measurement of the rotor displacement is carried out in the following manner: the difference in the static pressure between opposite faces of the hydrostatic gas bearing in a diametral direction of the hydrostatic gas bearing is measured by a pressure sensor, and the displacement of the rotor in the radial direction is obtained from this measured value.

DE 23 52 788 A1 discloses a bearing device that supports a rotary member to the fixed member via a rolling bearing and comprises a displacement measuring unit for measuring an axial direction displacement of the rotary member by supplying compressed gas into a gap to be measured between the rotary member and the fixed member in the vicinity of the rolling bearing, the gap being formed by a surface of the rotary member and a surface of the stationary member, which face each other in an axial direction of the rotary member, the displacement measuring unit including at least one displacement detecting unit having a compressed gas injection nozzle for injecting compressed gas into the gap to be measured, and at least one pressure loss measuring unit for measuring a pressure loss of the compressed gas supplied to the displacement detecting unit, each of the at least one displacement detecting unit having at least one gas collection groove for collecting the compressed gas injected into the gap to be measured from the compressed gas injection nozzle, the at least one gas collection groove being formed on one side or both sides of an axis of the compressed gas injection nozzle.

### PRIOR ART DOCUMENTS

### PATENT LITERATURE DOCUMENTS

Patent Literature Document 1: Japanese Patent Application Laid-Open Publication No. 2010-217167
Patent Literature Document 2: Japanese Patent No. 3662741

### SUMMARY OF THE INVENTION

### PROBLEMS TO BE SOLVED BY THE INVENTION

However, when the prior art arrangement described in Patent Literature Document 1 measures the displacement of the rotary shaft with a non-contact type sensor, the non-contact type sensor is arranged in the vicinity of the measurement target. Also, the circuits connected to the sensor and the wiring of the sensor need to be arranged in the vicinity of the measuring target. This entails many problems, such as the complexity of the internal structure of the machine tool and damages due to adhesion of chips and cutting water during machining.

Also, the spindle of the machine tool is the part which requires the high rigidity against the cutting load. Further, since the shaft displacement due to cutting load is about several µm, the shaft displacement measurement requires high accuracy and high resolution. This increases the cost.

In contrast, the prior art arrangement described in Patent Literature Document 2 can measure the displacement in the radial direction but cannot measure the displacement in the axial direction. Also, if the rotary member such as a rotor or a rotary shaft is supported by the rolling bearings, the prior art arrangement of Patent Literature Document 2 cannot be applied.

Therefore, the present invention has been made in view of the problems of the above-described prior art arrangements. An object of the present invention is to provide a bearing device and a spindle apparatus of a machine tool, which can measure the displacement of the rotary member in the axial direction of the rotary member precisely and contactless, without placing the measuring unit in the vicinity of the rotary member, when supporting the rotary member by rolling bearings.

### SOLUTION TO THE PROBLEMS

To achieve the above-mentioned object, a bearing device according to one aspect of the present invention supports a rotary member relative to a stationary member (fixed member) via rolling bearings, and includes a displacement measuring unit for supplying compressed gas to a gap-to-be-measured, formed in the axial direction, between the rotary member and the stationary member in the vicinity of one of the rolling bearings, and measuring an axial direction displacement of the rotary member. A gas collection groove for collecting the compressed gas is provided on one side or both sides of a nozzle configured to inject the compressed gas.

A spindle apparatus of a machine tool according to another aspect of the present invention includes a bearing device having the above-described configuration, and the bearing device rotatably supports a main shaft (spindle) as the rotary member, and the spindle apparatus measures the axial load exerted onto the main shaft.

### ADVANTAGES OF THE INVENTION

According to the bearing device according to the first aspect of the present invention, in a configuration that supports the rotary member by the rolling bearings, it is possible to measure the axial direction displacement of the rotary member by utilizing the compressed gas. It is therefore possible to measure the axial direction displacement of the rotary member with a simple configuration and high accuracy.

In the spindle apparatus of the machine tool according to the second aspect of the present invention, the main shaft (spindle) is rotatably supported by using the bearing device. Thus, the spindle apparatus can determine (obtain) the load acting on the main shaft in the axial direction by measuring the axial direction displacement of the main shaft during cutting.

### BRIEF DESCRIPTION OF THE DRAWINGS

FIG. 1 is a cross-sectional view showing a first embodiment of a spindle apparatus of a machine tool according to the present invention.
FIG. 2 is a set of diagrams showing a bearing device of FIG. 1. Specifically, FIG. 2(a) is an enlarged cross-sectional view of a portion of FIG. 1, and FIG. 2(b) is an enlarged cross-sectional view taken along the line II-II in FIG. 1.
FIG. 3 is a set of diagrams showing modifications to the bearing device, respectively. Specifically, FIG. 3(a) is an enlarged cross-sectional view of the bearing device when a compressed gas injection nozzle is directed upward, FIG. 3(b) is an enlarged cross-sectional view of the bearing device when the compressed gas injection nozzle is directed downward, and FIG. 3(c) is an enlarged top view when the compressed gas injection nozzle is turned to the right about its main axis.
FIG. 4 is a set of cross-sectional views of a second embodiment of the bearing device. Specifically, FIG. 4(a) is an enlarged cross-sectional view in the axial direction, and FIG. 4(b) is an enlarged cross-sectional view in a direction perpendicular to the axial direction.
FIG. 5 is a set of diagrams showing modifications to the second embodiment of the bearing device. Specifically, FIG. 5(a) is an enlarged cross-sectional view of a first modification, and FIG. 5(b) is an enlarged cross-sectional view of a second modification.
FIG. 6 is an enlarged cross-sectional view of a bearing device showing a third modification to the second embodiment of the present invention.
FIG. 7 is an enlarged cross-sectional view showing a third embodiment of the bearing device of the present invention.
FIG. 8 is an enlarged cross-sectional view showing a first modification to the third embodiment of the bearing device.
FIG. 9 is an enlarged cross-sectional view showing a second modification to the third embodiment of the bearing device.
FIG. 10 is a fluid passage diagram showing a third modification to the third embodiment of the bearing device.
FIG. 11 is another fluid passage diagram showing a modification to a fourth embodiment of the bearing device.
FIG. 12 is an air supply system diagram showing a fifth embodiment of the bearing device.
FIG. 13 is another air supply system diagram showing a first modification to the fifth embodiment of the bearing device.
FIG. 14 is still another air supply system diagram showing a sixth embodiment of the bearing device.
FIG. 15 is an enlarged cross-sectional view in the axial direction showing a seventh embodiment of the bearing device.
FIG. 16 is an enlarged cross-sectional view of the bearing device in the axial direction when viewed in a different phase from FIG. 15.
FIG. 17 is an enlarged cross-sectional view of the bearing device in the axial direction showing a first modification to the seventh embodiment.
FIG. 18 is an enlarged cross-sectional view of the bearing device in the axial direction showing a second modification to the seventh embodiment.
FIG. 19 is an enlarged cross-sectional view in the axial direction showing an eighth embodiment of the bearing device.
FIG. 20 is an enlarged cross-sectional view of the bearing device in the axial direction when viewed in a different phase from FIG. 19.
FIG. 21 is an enlarged cross-sectional view of the bearing device in the axial direction showing a modification to the eighth embodiment
FIG. 22 is an air supply system diagram showing a modification to a pressure loss measuring unit of the first to eighth embodiments.
FIG. 23 is a cross-sectional view in a direction perpendicular to the axial direction showing a modification according to the present invention.
FIG. 24 is a cross-sectional view showing a rotary table device of a machine tool, in which the bearing device according to the present invention is used.

### DETAILED DESCRIPTION OF THE EMBODIMENTS

Referring now to the drawings, embodiments of the present invention will be described. In the following description of the drawings, the same or similar components, elements and portions are denoted by the same or similar reference numerals. It should be noted that the drawings are schematic, and the relationship between the thickness and the top-view dimensions, the ratio of the thickness of layers, etc. may be different from the actual ones. Therefore, the specific thickness and dimensions should be determined in consideration of the following description. Moreover, it is needless to say that the drawings also include portions having different dimensional relationships and ratios from each other.

The embodiments described below are intended to exemplify a device, an apparatus and a method for embodying the technical concept of the present invention. The technical concept of the present invention is not limited to the material, shape, structure, arrangement, etc. of components, elements and portions described in the following description. The technical concept of the present invention encompasses various changes within the technical scope defined by the claims.

### First Embodiment

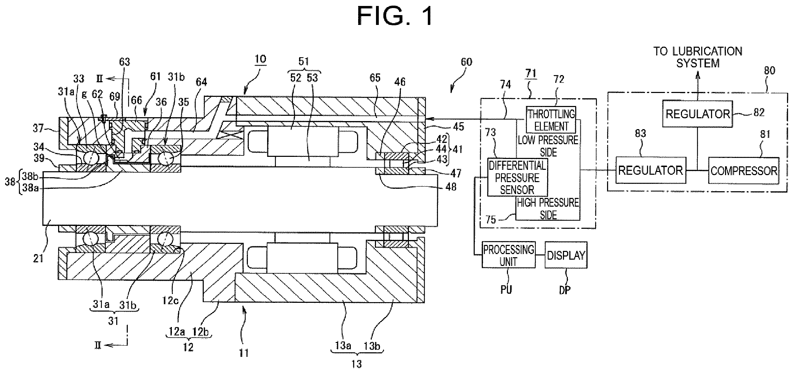

First, a first embodiment of the spindle device of the machine tool according to the present invention will be described with reference to FIG. 1, FIG. 2 and FIG. 3.

The spindle apparatus 10 of the machine tool is a motor built-in type. A hollow rotating shaft (spindle shaft) 21, which is a rotary member, is rotatably supported in a housing 11, which is a stationary member or a fixed member, by a front rolling bearing set 31 and a rear rolling bearing 41 of a bearing device. The rotating shaft 21 is caused to rotate by a drive motor 51 disposed between the front rolling bearing set 31 and the rear rolling bearing 41.

The housing 11 includes a front cylindrical portion 12 and a rear cylindrical portion 13. The housing 11 is divided into these two cylindrical portions at a particular position between the front rolling bearing set 31 and the drive motor 51.

The front cylindrical portion 12 includes a small outer diameter portion 12a, which defines a front portion, and a large outer diameter portion 12b, which defines a rear portion and has a larger outer diameter than the small outer diameter portion 12a. The inner diameter of an inner peripheral surface of the small outer diameter portion 12a is equal to the inner diameter of an inner peripheral surface of the large outer diameter portion 12b, but a bearing-receiving stepped-portion 12c for receiving the front rolling bearing set 31 is formed from the front end toward the rear end of the small outer diameter portion 12a.

On the other hand, the rear cylindrical portion 13 includes a large inner diameter portion 13a, which has a large inner diameter, and a small inner diameter portion 13b, which has a smaller inner diameter than the large inner diameter portion 13a.

The front rolling bearing set 31 includes a pair of angular contact ball bearings 31a and 31b, which have substantially the same dimensions and arranged such that the back of the bearing 31a faces the back of the bearing 31b. Each of the angular contact ball bearings 31a and 31b has an outer ring 33 which is a stationary-side race ring, an inner ring 34 which is a rotary-side race ring, and a plurality of balls 35 which serve as rolling elements disposed with a contact angle between the outer ring race groove which is a stationary-side race and the inner ring race groove which is a rotary-side race. In short, each of the bearings 31a and 31b has the inner ring 34, the outer ring 33, and the balls (rolling elements) 35 which are rotatably disposed between the inner ring 34 and the outer ring 33. It should be noted that each of the bearings 31a and 31b may be provided with a holding component for holding the rolling elements.

The angular contact ball bearings 31a and 31b are arranged such that the outer rings 33 of the ball bearings are fitted in the bearing receiving step portion 12c formed in the front cylindrical portion 12 of the housing 11 respectively, with an outer ring spacer 36 being interposed between the outer rings 33, and such that the outer rings are fixed by a front bearing outer ring retainer 37 which is bolted to the front cylindrical portion 12 of the housing 11.

Further, the inner rings 34 of the angular contact ball bearings 31a and 31b are fitted over the rotary shaft 21 respectively, with an inner ring spacer 38 being interposed between the inner rings 34, and the inner rings 34 are fixed to the rotary shaft 21 by a nut 39 which is fastened to the rotary shaft 21. A predetermined position preload is applied to the angular contact ball bearings 31a and 31b by the nut 39. Therefore, the axial position of the rotary shaft 21 is decided by the front rolling bearing set 31.

The rear rolling bearing 41 is a cylindrical roller bearing, and has an outer ring 42, an inner ring 43, and a plurality of cylindrical rollers 44 as rolling elements. The outer ring 42 of the rear rolling bearing 41 is fitted into the small inner diameter portion 13b of the rear cylindrical portion 13 of the housing 11, and is fixed to the small inner diameter portion 13b by a rear bearing retainer 45 which is bolted to the small inner diameter portion 13b, with an outer ring spacer 46 being interposed between the outer ring and the small inner diameter portion. The inner ring 43 of the rear rolling bearing 41 is fixed to the rotary shaft 21 via an inner ring spacer 48 by another nut 47 which is fastened to the rotary shaft 21.

The drive motor 51 includes a stator 52 which is fitted into the large inner diameter portion 13a of the rear cylindrical portion 13 of the housing 11, and a rotor 53 which is fitted over the rotary shaft 21 and faces the inner periphery of the stator 52 through a gap.

The spindle apparatus 10 of the machine tool having the above-described configuration includes a displacement measuring unit 60 for measuring an axial load applied to the rotary shaft 21. The displacement measuring unit 60 includes a displacement detecting unit 61 for detecting the axial direction displacement of the rotary shaft 21 (displacement of the rotary shaft in the axial direction) by utilizing compressed gas, and a pressure loss measuring unit 71 for supplying the compressed gas to the displacement detecting unit 61 and measuring the pressure loss corresponding to a gap between the outer ring spacer 36 and the inner ring spacer 38. One displacement detecting unit and one pressure loss measuring unit make a pair. At least one pair of displacement detecting unit 61 and the pressure loss measuring unit 71 is arranged in the circumferential direction of the housing 11. Further, the displacement measuring unit 60 includes an arithmetic processing unit PU for calculating the axial load exerted on the rotary shaft 21 based on the measurement results of the pressure loss measuring unit(s) 71.

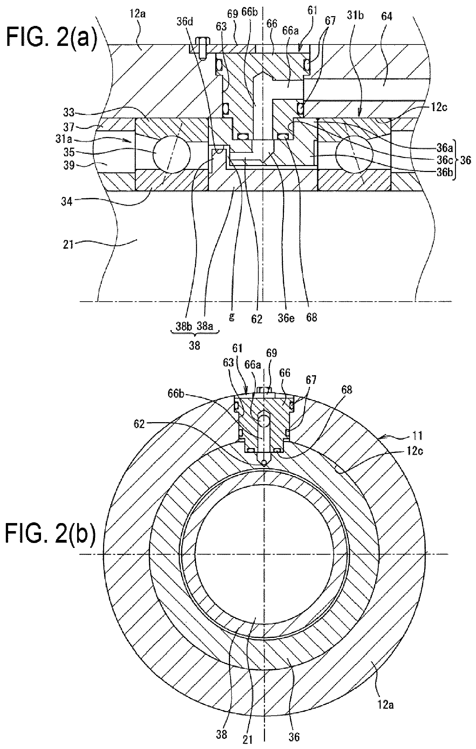

As shown in FIG. 2(a) and FIG. 2(b), the displacement detecting unit 61 is disposed in at least one position in the circumferential direction of the small outer diameter portion 12a of the front cylindrical portion 12 of the housing 11.

Each displacement detecting unit 61 is configured to include the outer ring spacer 36 and the inner ring spacer 38 of the front rolling bearing 31. Specifically, the outer ring spacer 36 includes outer peripheral ring portions 36a and inner peripheral ring portions 36b having a narrower width than the outer peripheral ring portions 36a. One of the outer peripheral ring portions 36a is in contact with an axial end face of the outer ring 33 of the angular contact ball bearing 31a and the other outer peripheral ring portion 36a is in contact with an axial end face of the outer ring 33 of the angular contact ball bearing 31b.

The outer peripheral ring portion 36a has a recess 36c, which extends inwardly from the outer surface in the central portion of the outer peripheral ring portion 36a. The center portion is present in a center area when viewed in the axial direction. The inner peripheral ring portion 36b has a circumferential groove 36d that faces between the outer ring 33 and the inner ring 34 of the angular contact ball bearing 31a.

The inner ring spacer 38 has a cylindrical portion 38a that fits over the rotary shaft 21, and an annular protruding portion 38b that protrudes outward in the radial direction from the vicinity of the front end of the cylindrical portion 38a and extends into the circumferential groove 36d of the outer ring spacer 36. The cross-sectional shape of the annular protruding portion 38b is rectangular.

As shown in FIG. 2(a), a "gap to be measured" **g** is formed between a left side face of the outer ring spacer 36, which defines the annular groove 36d, and a right side face of the annular protruding portion 38b of the inner ring spacer 38. The gap **g** is formed in the axial direction.

A distance between the bottom of the circumferential groove 36d and the outer peripheral surface of the annular protruding portion 38b is also set to be the same as the gap to be measured **g**. Similarly, a distance between the inner peripheral surface of the outer ring spacer 36 and the outer peripheral surface of the cylindrical portion 38a of the inner ring spacer 38 is set to be the same as the gap to be measured **g**. It should be noted, however, that the gaps other than the "gap to be measured **g**" are not necessarily equal to the gap **g,** and may be greater than the gap **g**.

In the outer ring spacer 36, a gas passage 36e is formed such that the gas passage 36e extends from the bottom of the recess 36c in the radial direction toward the inner peripheral surface, and a compressed gas injection nozzle 62 is formed such that the nozzle 62 extends from a distal end of the gas passage 36e in the axial direction toward the gap to be measured **g** and is open to the right side face (wall) of the circumferential groove 36d. Compressed gas from the compressed gas injection nozzle 62 is injected into the measurement target gap or the gap to be measured **g** between the circumferential groove 36d of the outer ring spacer 36 and the annular protruding portion 38b of the inner ring spacer 38.

It is expected that the spindle shaft of the machine tool rotates at a high speed to improve the machining efficiency. Therefore, in particular, while the spindle is rotating, a temperature difference occurs between the housing 11 and the rotary shaft 21. Since the temperature of the rotary shaft 21 becomes higher than the housing 11 in many cases, a gap between the housing 11 and the rotary shaft 21 in the axial direction is reduced by several to several-tens micrometers. The center of the relative elongation in the axial direction due to the temperature difference varies with a structure for fixing the bearings or the like. Thus, whether the elongation becomes large or small changes with a configuration of the bearing device concerned. Also, there is an influence from a centrifugal force, and therefore the rotary shaft 21 may shift relative to the housing 11 in the axial direction by several to several-tens micrometers as the contact angle changes, depending upon the shrinkage of the rotary shaft 21 in the axial direction and/or the preloading to the bearings (31a, 31b).

Further, in the machine tool spindle, the gap formed between the housing 11 and the rotary shaft 21, such as between the outer ring spacer 36 and the inner ring spacer 38, is set to about a few tenths of 1mm at most in order to prevent the penetration of foreign matter into the spindle interior and the rolling bearings 31.

A gap (throttling) in the axial direction may be formed between the housing and the rotating body in a certain type of machine tool spindle in order to prevent the penetration of foreign matter or the like into the spindle interior and/or the bearings. In such a configuration, the gap is set to about a few tenths of 1mm at most.

Therefore, the gap to be measured **g** between the outer ring spacer 36 and the inner ring spacer 38 is set to 0.05mm - 0.5mm when the rotary shaft 21 is at rest. An amount of change in the pressure loss in response to the axial displacement of the rotary shaft 21 becomes larger as the gap becomes smaller. Thus, the measurement target gap **g** is preferably set to 0.05mm - 0.2mm.

In order to accurately (precisely) measure the gap to be measured **g** between the outer ring spacer 36 and the inner ring spacer 38 during operation, it is desired that the inner ring spacer 38 provided in the displacement detecting unit 61 becomes coaxial with the rotary shaft 21 as much as possible.

A circular opening 63 is formed in the small outer diameter portion 12a of the housing 11. The circular opening 63 extends from the outer peripheral surface of the small outer diameter portion12a and reaches the recess 36c of the outer ring spacer 36. The circular opening 63 is coaxial with the gas passage 36e. The inner diameter of the circular opening 63 is reduced in two stages. As shown in FIG. 1, one end of the compressed gas supply passage 64 formed in the front cylindrical portion 12 is open in the rear side wall of the opening 63. The other end of the compressed gas supply passage 64 is in communication with a compressed gas supply passage 65 which is formed in the rear cylindrical portion 13 and extends forward axially from its rear end opening.

Further, as shown in FIG. 2(a) and FIG. 2(b), the gas connecting portion 66 is disposed in the opening 63. The gas connecting portion 66 serves as a gas direction converting unit to supply the compressed gas supplied from the compressed gas supply passage 64 to the compressed gas injection nozzle 62 through the gas passage 36e of the outer ring spacer 36 by converting the direction of the compressed gas from the axial direction to the radial direction.

The gas connecting portion 66 has a shape that can be fitted into the opening 63, e.g., an outer peripheral shape of the gas connecting portion 66 is the same as the inner peripheral shape of the opening 63. The gas connecting portion 66 has a gas passage 66a and another gas passage 66b therein. The gas passage 66a communicates with the opening 63. One end of the gas passage 66b communicates with the gas passage 66a, and the other end communicates with the compressed gas injection nozzle 62. An O-ring 67 is disposed between the side wall of the gas connecting portion 66 and the inner wall of the opening 63. Similarly, an O-ring 68 is disposed between the bottom surface of the gas connecting portion 66 and the bottom surface of the recess 36c. These O-rings 67 and 68 prevent leakage of the compressed air.

Further, as shown in FIG. 2(a) and FIG. 2(b), the stepped portion of the outer peripheral surface of the gas connecting portion 66 is in contact with the stepped portion of the inner peripheral surface of the opening 63. Thus, the gas connecting portion 66 is positioned in the radial direction. The radially outer end face of the gas connecting portion 66 is in contact with a pressing piece or a holding element 69 screwed to the outer peripheral surface of the small outer diameter portion 12a such that the disengaging of the gas connecting portion 66 from the opening 63 is prevented. It should be noted that how to prevent the disengagement of the gas connecting portion 66 is not limited to use of the holding piece 69. For example, a flange portion may be formed on the outer peripheral surface of the gas connecting portion 66, and the flange portion may be screwed. Thus, the fixing method for fixing the gas connecting portion 66 to the housing 11 can be any fixing method.

As shown in FIG. 1, the compressed gas, which has, for example, a pressure of about four atmospheres, is supplied to a lubrication system (lubrication line) of the pressure loss measuring unit 71 from the compressed gas supply unit 80 to carry out oil-air lubrication or oil-mist lubrication (not shown) for supplying a lubrication oil to the front rolling bearing set 31 and the rear rolling bearing 41. The compressed gas supply unit 80 includes a compressor 81 for generating the compressed gas, a regulator 82 provided for the lubricant system for regulating the pressure of the compressed gas supplied from the compressor 81, and another regulator 83 connected in parallel with the regulator 82 and used for pressure loss measurement.

The pressure loss measuring unit 71 includes a restrictor or a throttling element 72 disposed in the supply path of the compressed gas, and a differential pressure sensor 73 for detecting the differential pressure across the throttling element 72 (differential pressure between the upstream and downstream sides of the throttling element). It should be noted that the lubrication in the first embodiment is not limited to the oil-air lubrication or the oil-mist lubrication. For example, the lubrication may be carried oud with greases or the like in the first embodiment.

The throttling element 72 is disposed in a pipe 74 that connects the regulator 83 to the opening of the compressed gas supply passage 65 formed in the housing 11. A restricting amount (degree of throttling) of the throttling element 72 is decided such that the differential pressure detection value detected by the differential pressure sensor 73 when the axial direction displacement of the rotary shaft 21 during rotation of the rotary shaft 21 is "0" becomes a preset value. Thus, the pressure on the downstream side of the throttling element 72 represents a pressure loss corresponding only to the axial direction displacement of the rotary shaft 21 in consideration of the flow path resistance by the pipe diameter and the pipe length from the throttling element 72 to the displacement detecting unit 61.

The low-pressure side of the differential pressure sensor 73 is connected to the pipe 74 on the downstream side of the throttling element 72, and the high-pressure side of the differential pressure sensor 73 is connected to the regulator 83 through the pipe 75. The differential pressure sensor 73 detects the differential pressure between the pressure of the compressed air supplied from the regulator 83 and the downstream pressure of the throttling element 72 connected to the displacement detecting unit 61, i.e., the pressure loss corresponding to the axial direction displacement of the rotary shaft 21 at the displacement detecting unit 61. The differential pressure sensor 73 then issues (generates) the detected differential pressure value in the form of an analog value or a digital value.

The arithmetic processing unit PU is constituted by, for example, an arithmetic processing device such as a microcomputer. The processing unit PU receives the differential pressure detection value from the differential pressure sensor 73 of each of the pressure loss measuring units 71. The differential pressure detection value is proportional to the axial load exerted on the rotary shaft 21. Therefore, if bearing stiffness values (spring constants) of the angular contact ball bearings 31a and 31b of the front rolling bearing set 31, to which a preload is exerted at a predetermined location, are measured or calculated in advance, the relationship between the magnitude of the axial load and the differential pressure detection value based on the displacement of the rotary shaft 21 is obtained to prepare a load calculation map, and the load calculation map is stored in a storage unit of the arithmetic processing unit PU, then it is possible to obtain the direction and the magnitude of the axial load exerted on the rotary shaft 21 by referring to the load calculation map based on the differential pressure detection value. The direction and the magnitude of the calculated axial load are sent to the display unit PD and displayed on the display unit PD.

It should be noted that instead of using the load calculation map, the equation of the characteristic line (curve) of the load calculation map may be prepared, and the differential pressure detection value of the differential pressure sensor 73 may be substituted in the equation to calculate the axial load.

Next, the operation of the first embodiment will be described.

First, the compressed gas is supplied to the pressure loss measuring unit 71 from the compressed gas supply unit 80. As described above, while the rotary shaft 21 of the spindle apparatus 10 of the machine tool is rotating and the axial load exerted on the rotary shaft 21 is being "0", the throttling of the throttling element 72 of the pressure loss measuring unit 71 is adjusted to a value that causes the differential pressure detection value detected by the differential pressure sensor 73 to become the preset value.

Then, while the rotary shaft 21 of the spindle apparatus 10 is at rest, the compressor 81 is actuated to regulate the pressure of the compressed gas by the regulator 82. The compressed gas having the regulated (predetermined) value of pressure is supplied to the lubrication oil supply system (not shown) for the front rolling bearing set 31 and the rear rolling bearing 41 in order to start the supply of the lubricant to the front rolling bearing set 31 and the rear rolling bearing 41.

At the same time, or before or after starting the supply of the lubricant, the compressed gas generated from the compressor 81 is regulated by the regulator 83 and supplied to the pressure loss measuring unit 71.

The compressed gas supplied to the pressure loss measuring unit 71 is introduced to the compressed gas supply passage 65 of the housing 11 through the throttling element 72. The compressed gas introduced to the compressed gas supply passage 65 is supplied to the compressed gas injection nozzle 62 through the gas passage 36e from the compressed gas supply passage 64 connected to the compressed gas supply passage 65 as the compressed gas is turned 90 degrees radially from the axial direction at the gas connecting portion 66.

The compressed gas supplied to the compressed gas injection nozzle 62 is supplied to the measurement target gap (gap to be measured) **g** between the right side face of the circumferential groove 36d of the outer ring spacer 36 and the right side face of the annular protruding portion 38b of the inner ring spacer 38. As the axial direction displacement of the rotary shaft 21 increases from "0", the measurement target gap **g** decreases, and the pressure loss decreases correspondingly. On the other hand, as the axial direction displacement decreases, the measurement target gap **g** increases, and the pressure loss increases correspondingly. As described above, the gap **g** to be measured becomes smaller because the rotary shaft 21 shifts relative to the housing 11 in the axial direction due to the influence of the temperature difference between the rotary shaft 21 and the housing 11 while the spindle is rotating and the influence of the centrifugal force.

Therefore, in the no-load state in which the axial direction displacement of the rotary shaft 21 is "0", the differential pressure detection value detected by the differential pressure sensor 73 becomes the preset value, and the differential pressure detection value that represents that the axial direction displacement of the rotary shaft 21 is "0" is sent to the arithmetic processing unit PU.

Thus, the arithmetic processing unit PU refers to the load calculation map based on the differential pressure detection value received from the differential pressure sensor 73, and calculates the axial load. The calculated load is sent to the display DP and displayed on the display DP. In this instance, since the axial direction displacement is "0", the axial load displayed on the display DP is "0".

Suppose that a drill is attached to the rotary shaft 21 and the drilling process starts from this condition, for example. Then, an axial load is applied to the rotary shaft 21, and an axial direction displacement corresponding to the axial load occurs in the rotary shaft 21.

Therefore, the pressure loss corresponding to the axial direction displacement occurs in the compressed gas injected from the compressed gas injection nozzle 62 of the displacement detecting units 61 in accordance with the axial direction displacement of the rotary shaft 21. The pressure loss is detected as a differential pressure detection value by the differential pressure sensor 73 of the pressure loss measuring unit 71.

As the detected differential pressure detection value is supplied to the arithmetic processing unit PU, the arithmetic processing unit PU refers to the load calculation map and calculates the axial load exerted on the rotary shaft 21. The calculated axial load is introduced to the display DP and displayed on the display DP.

In the first embodiment, therefore, the compressed gas is supplied to the displacement detecting unit 61 which is configured to detect the displacement in the axial direction and includes the outer ring spacer 36 and the inner ring spacer 38 of the front rolling bearing set 31 such that the compressed gas is injected from the compressed gas injection nozzle 62 into the measurement target gap **g** between the circumferential groove 36d of the outer ring spacer 36 and the annular protruding portion 38b of the inner ring spacer 38. Thus, the pressure loss of the compressed gas corresponding to the axial direction displacement of the rotary shaft 21, i.e., the measurement target gap **g**, is generated. The pressure loss is detected by the differential pressure sensor 73 of the pressure loss measuring unit 71 provided outside the housing 11, and the detected differential pressure detection value is introduced to the arithmetic processing unit PU. Thus, it is possible to calculate the axial load applied onto the rotary shaft 21.

Therefore, the displacement detecting unit 61 can create the pressure loss corresponding to the axial direction displacement of the rotary shaft 21 by a simple configuration that only includes the circumferential groove 36d of the outer ring spacer 36, the annular protruding portion 38b of the inner ring spacer 38 facing the circumferential groove 36d of the outer ring spacer through the measurement target gap **g,** the gas passage 36e, the compressed gas supply passage 64, the gas connecting portion 66 and the compressed gas injection nozzle 62. Since the displacement detecting unit 61 does not require components that operate electrically, it is not necessary to consider the routing and electrical insulation of the wiring.

Further, the pressure loss measuring unit 71 supplies the compressed gas to the displacement detecting unit 61 through the throttling element 72, and measures the pressure loss at the displacement detecting unit 61 by detecting the differential pressure between the pressure downstream of the throttling element 72, i.e., the pressure at the displacement detecting unit 61, and the original pressure of the compressed gas supplied to the pressure loss measuring unit 71. Then, as the detected differential pressure detection value is introduced to the arithmetic processing unit PU and the load calculation map is referred to, it is possible to calculate the axial load applied onto the rotary shaft 21.

Therefore, if the rotary shaft 21 is rotatably supported by the rolling bearings, the simple configuration can calculate the axial direction displacement of the rotary shaft 21 by utilizing the compressed gas, and calculate the axial load applied onto the rotary shaft 21.

In the above-described first embodiment, the compressed gas supply passages 64 and 65 extend in the housing 11 in the axial direction of the shaft, but the first embodiment is not limited to such configuration. For example, the gas passage 66b of the gas connecting portion 66 may be elongated (extended) to the outer periphery of the housing such that the gas passage 66b is open (makes an opening) in the outer periphery, and the opening may be connected to the pressure loss measuring unit 71. Alternatively, the compressed gas supply passage 65 may be dispensed with, and the compressed gas supply passage 64 may be extended to the outer periphery of the small outer diameter portion 12a such that the passage 64 is open in the outer periphery of the small outer diameter portion 12a, and the opening may be connected to the pressure loss measuring unit 71.

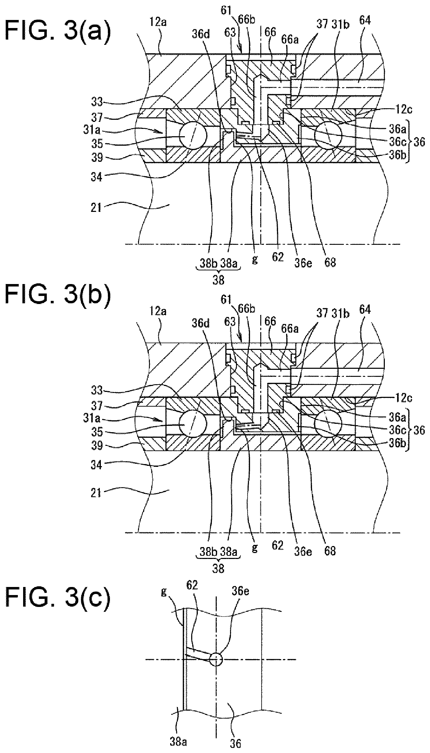

Although the compressed gas injection nozzle 62 extends in the axial direction of the shaft in the above-described first embodiment, the present invention is not limited to such configuration. As shown in FIG. 3(a), the compressed gas injection nozzle 62 may incline upward. Alternatively, as shown in FIG. 3(b), the compressed gas injection nozzle 62 may incline downward. Alternatively, as shown in FIG. 3(c), the compressed gas injection nozzle 62 may be turned about the center axis of the gas passage 36e.

In the above-described first embodiment, the throttling of the throttling element 72 of the pressure loss measuring unit 71 is adjusted such that the differential pressure detection value detected by the differential pressure sensor 73 becomes the preset value while the rotary shaft 21 of the spindle apparatus 10 of the machine tool is rotating and the axial load exerted on the rotary shaft 21 is being "0". However, the present invention is not limited to this adjustment. For example, the differential pressure of each pressure loss measuring unit 71 may be adjusted to a certain value by the throttling element 72 of the pressure loss measuring unit 71 while the rotary shaft 21 of the spindle apparatus 10 is at rest without an external load (0 rotation state), and this state is set as displacement 0. Then, as the rotational speed of the rotary shaft 21 changes, the differential pressure of each pressure loss measuring unit 71 changes with the rotational speed of the rotary shaft 21, and the differential pressure set to the displacement 0 is also offset by the same amount. Subsequently, when the rotational speed becomes stable, a trigger signal is given from the outside while no load is being applied to the rotary shaft (in the above-described no-load state), and the value obtained at that time is set to "0". Thus, if the rotation speed of the rotary shaft 21 is constant, it is possible to carry out the measurement in the same manner as the first embodiment, even at different rotational speeds.

### Second Embodiment

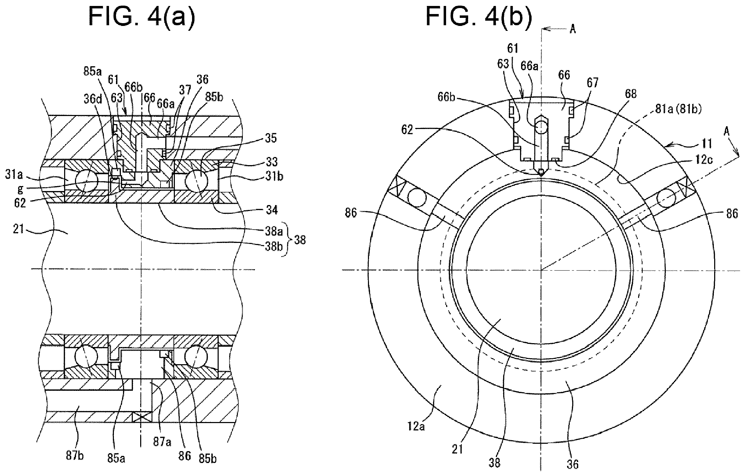

Next, a second embodiment of the bearing device according to the present invention will be described with reference to FIG. 4. FIG. 4(a) is a cross-sectional view that shows a cross-sectional structure, taken along the line A-A in FIG. 4(b).

In the second embodiment, the influence of the compressed gas on the front rolling bearing is eliminated.

In the second embodiment, as shown in FIG. 4(a) and FIG. 4(b), a gas collecting groove (gas collection groove) 85a is formed in the displacement detecting unit 61 such that the gas collecting groove 85a is provided in the bottom face of the circumferential groove 36d of the outer ring spacer 36 and extends in the circumferential direction to collect the compressed gas. Another gas collecting groove 85b is formed in the end area in the vicinity of the angular contact ball bearing 31b such that the gas collecting groove 85b is provided in the inner peripheral face of the outer ring spacer 36, which faces the outer peripheral face of the inner ring spacer 38, and extends in the circumferential direction to collect the compressed gas. As shown in a lower half of FIG. 4(a) and FIG. 4(b), cavities 86 are formed in the outer ring spacer 36 at opposite positions across the displacement detecting unit 61 such that the cavities 86 communicate with the gas collecting grooves 85a and 85b. On the other hand, gas discharge passages 87a, which extend radially and communicate with the cavities 86, are formed in the small outer diameter portion 12a at positions facing the cavities 86. In the small outer diameter portion 12a, another gas discharge passages 87b are formed. One end of each gas discharge passage 87b communicates with the associated gas discharge passage 87a, and the other end of each gas discharge passage 87b is open at the front end of the small outer diameter portion. These gas collection grooves 85a and 85b, the cavities 86, and the gas discharge passages 87a and 87b constitute, in combination, compressed gas discharge passages (compressed gas discharge sections). The gas discharge passages 87a and 87b may be referred to as drain portions for discharging the compressed gas out of the bearing device.

According to the second embodiment, the compressed air injected into the measurement target gap **g** formed between the right side face of the annular protruding portion 38b of the inner ring spacer 38 and the left side face of the circumferential groove 36d of the outer ring spacer 36 from the compressed gas injection nozzle 62 of the displacement detecting unit 61 flows in the measurement target gap **g** and spreads in the front direction, the rear direction and the circumferential direction. The compressed gas spreading in the front and rear directions enters the gas collection grooves 85a and 85b. The compressed gas flows clockwise and counterclockwise through the gas collection grooves 85a and 85b in the circumferential direction of FIG. 4(a) and reaches the cavities 86. As the compressed air flows through the gas discharge passages 87a and 87b in the small outer diameter portion 12a from the cavities 86, the compressed air is discharged to the outside from the front end face of the small outer diameter portion 12a.

Therefore, it is possible to prevent the compressed gas, which is injected from the compressed gas injection nozzle 62, from flowing into between the outer ring 33 and the inner ring 34 of the angular contact ball bearing 31a disposed in front of the outer ring spacer 36 and the inner ring spacer 38 and between the outer ring 33 and the inner ring 34 of the angular contact ball bearing 31b disposed behind the outer ring spacer 36 and the inner ring spacer 38. Consequently, the influence of the compressed gas that would otherwise flow into the angular contact ball bearings 31a and 31b, that is, the adverse influence on the oil-air lubrication and the oil-mist lubrication to the angular contact ball bearings can be prevented.

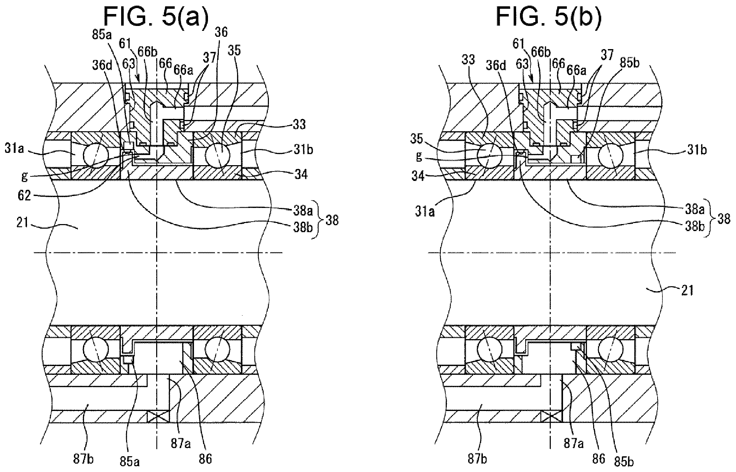

In the above-described second embodiment, the gas collection grooves 85a and 85b are formed in the outer ring spacer 36 such that the gas collection grooves 85a and 85b are provided at positions in front of and behind the measurement target gap **g**, i.e., positions across the measurement target gap **g**, into which the compressed gas from the compressed gas injection nozzle 62 is supplied, but the second embodiment is not limited to such configuration. Specifically, as shown in FIG. 5(a), one of the gas collection groove 85a and the gas collection grooves 85b, e.g., the gas collection groove 85b, may be omitted. Alternatively, as shown in FIG. 5(b), the other gas collection groove 85a may be omitted. In such configuration, although the gas collection efficiency slightly drops, the compressed gas can flow longer through gaps other than the measurement target gap **g** between the outer ring spacer 36 and the inner ring spacer 38 in the area where the gas collection groove is omitted. As the compressed gas flows longer, the flow path resistance increases. As a result, most of the compressed gas flows into the gas collection grooves 85a (or 85b), which have a smaller flow path resistance. Thus, the adverse influence of the compressed gas on the angular contact ball bearings 31a and 31b is small.

In the second embodiment, the single displacement detecting unit 61 is installed, but the second embodiment is not limited to such configuration. Two or more displacement detecting units 61 may be installed. Further, the locations of the cavities 86 formed in the outer ring spacer 36 and the locations of the gas passages 87a and 87b formed in the small outer diameter portion 12a may be in the intermediate portions between each two adjacent displacement detecting units 61. In this configuration, because the cavity 86 is formed in the intermediate portion between each two adjacent displacement detecting units 61, it is possible to prevent the compressed gas injected from one of the two adjacent displacement detecting units 61 from adversely affecting the other displacement detecting unit 61. Alternatively, a plurality of cavities 86 may be provided between each two adjacent displacement detecting units 61.

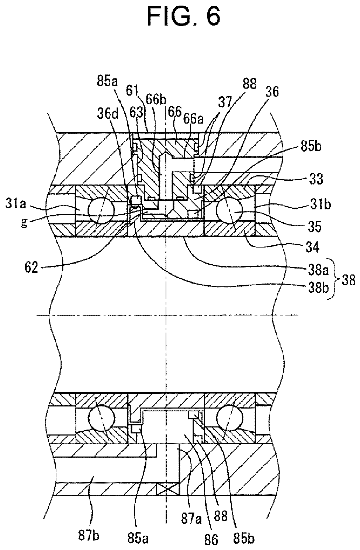

In the above-described second embodiment, the two pairs of gas discharge passages 87a and 87b are provided for the sole displacement detecting unit 61, but the second embodiment is not limited to such configuration. As shown in FIG. 6, a communication groove 88 may be formed in the outer peripheral surface of the outer ring spacer 36 such that the communication groove 88 extends in the circumferential direction and allows the cavity portions 86 to communicate with each other in the circumferential direction, and the gas discharge passages 87a and 87b may be provided for one of the cavities 86. In this configuration, the single pair of gas discharge passages 87a and 87b can collect the compressed gas injected from the displacement detecting unit 61 as the compressed gas flows to the pair of gas discharge passages clockwise and counterclockwise in the circumferential direction. Therefore, it is possible to reduce the number of compressed gas discharge passages formed in the housing 11 and reduce the man-hour of the work for preparing (manufacturing) the housing 11.

### Third Embodiment

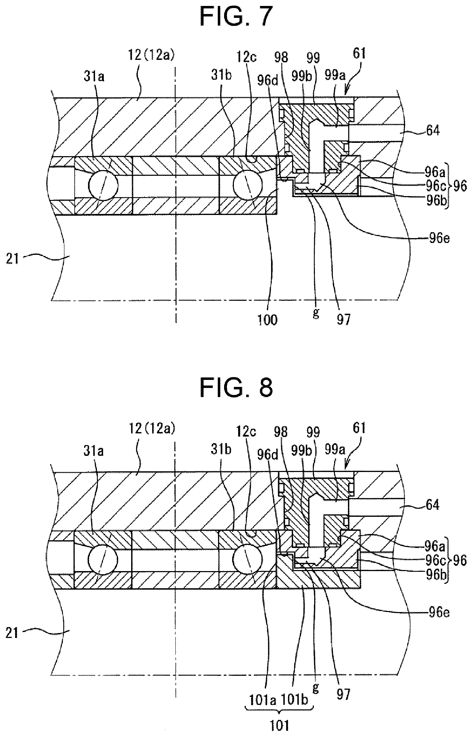

Next, a third embodiment of the bearing device according to the present invention will be described with reference to FIG. 7.

In the third embodiment, the length of the measurement target gap **g** formed between the inner peripheral surface of the outer ring spacer 36 and the outer peripheral surface of the inner ring spacer 38 in the axial direction of the rotary shaft is set to the required minimum length.

In the third embodiment, the displacement detecting unit 61 is formed at a position adjacent to the front rolling bearings 31 in the axial direction, rather than in the spacer between the front rolling bearings 31.

Specifically, in the third embodiment, as shown in FIG. 7, the displacement detecting unit 61 is provided adjacent to the back of the rear angular contact ball bearing 31b of the front rolling bearing set 31.

Therefore, the bearing-receiving stepped-portion 12c formed on the inner peripheral surface of the front cylindrical portion 12 of the housing 11 is extended to behind the angular contact ball bearing 31b of the front rolling bearing set 31.

In the displacement detecting unit 61, an outer ring spacer 96 is disposed at the extension portion of the bearing-receiving stepped-portion 12c. The outer ring spacer 96 has the same shape as the outer ring spacer 36 in the first and second embodiments. The inner peripheral surface of the outer ring spacer 96 faces the outer peripheral surface of the rotary shaft 21.

The outer ring spacer 96 includes an outer peripheral ring portion 96a, an inner peripheral ring portion 96b, a recess 96c, a circumferential groove 96d, a gas passage 96e and a compressed gas injection nozzle 97. This is similar to the outer ring spacer 36.

Further, an opening 98, which is similar to the opening 63, is formed at a position where the outer ring spacer 96 faces the small outer diameter portion 12a of the housing 11. A gas connecting portion 99 having gas passages 99a and 99b therein, which is similar to the gas connecting portion 66, is provided in the opening 98.

Also, an annular protrusion 100 is formed on the rotary shaft 21 such that the annular protrusion 100 protrudes into the circumferential groove 96d of the outer ring spacer 96. The gap to be measured **g** is formed between the right side face of the annular protrusion 100 and the left side face of the circumferential groove 96d of the outer ring spacer 96, which faces the right side face of the annular protrusion 100. The compressed gas is injected into the gap to be measured **g** from the compressed gas injection nozzle 97 formed in the outer ring spacer 96.

Since the displacement detecting unit 61 of the third embodiment performs the same operation as the first embodiment, it is possible to provide the same working effects and advantages as the first embodiment, and calculate the axial load. In the third embodiment, the compressed gas is injected from the outer ring spacer 96 directly to the measurement target gap **g** formed between the annular protrusion 100 formed on the rotary shaft 21 and the outer ring spacer, whereas in the first and second embodiments the compressed gas is injected to the measurement target gap **g** formed between the inner ring spacer and the outer ring spacer. In the third embodiment, therefore, it is possible to eliminate the inner ring spacer 38 of the first and second embodiments and increase the shape accuracy of the measurement target gap **g**.

It should be noted that although the annular protrusion 100 is formed on the rotary shaft 21 in the third embodiment, the third embodiment is not limited to such configuration. As shown in FIG. 8, an inner ring spacer 101, which includes a cylindrical portion 101a and an annular protrusion 101b protruding into the circumferential groove 96d of the outer ring spacer 96, may be provided as in the first and second embodiments.

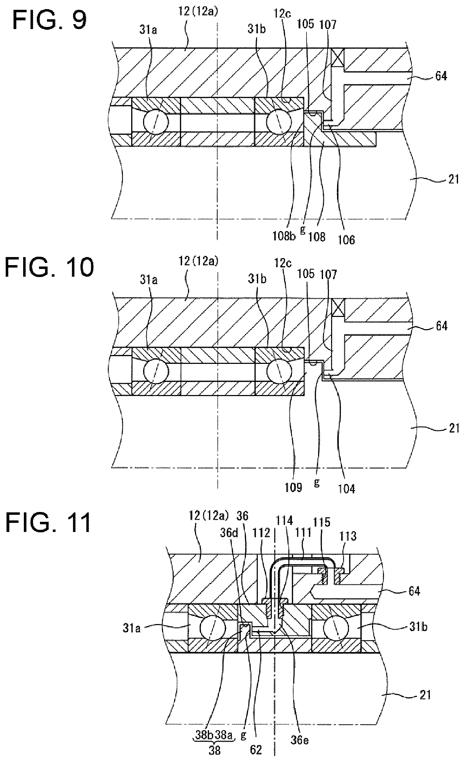

In the third embodiment, the displacement detecting unit 61 includes the outer ring spacer 96 and the gas connecting portion 99 as in the above-described first embodiment, but the third embodiment is not limited to such configuration. For example, as shown in FIG. 9, the outer ring spacer 96 of the third embodiment may be eliminated. Instead of the outer ring spacer 96, the small outer diameter portion 12a of the housing 11 may include a circumferential groove 105 formed in the inner peripheral surface of the small outer diameter portion 12a behind the back of the angular contact ball bearing 31b, a compressed gas injection nozzle 106 that opens in the left side surface of a wall of the circumferential groove 105 and extends in the axial direction, and a gas passage 107 that communicates with the rear end of the compressed gas injection nozzle 106, extends in the radial direction and communicates with the compressed gas supply passage 64 at its outermost end (upstream end). The circumferential groove 105 receives the annular protrusion 108b of the inner ring spacer 108 fitted over the outer circumferential surface of the rotary shaft 21 as in the above-described modification to the third embodiment. The gap to be measured **g** is formed between the right side face of the annular protrusion 108b and the left side face of the circumferential groove 105. In this configuration, the outer ring spacer 96 and the gas connecting portion 99 of FIG. 8 may be dispensed with, and it is possible to reduce the number of parts and elements of the bearing device while preventing the occurrence of the phase error in the circumferential direction, which would be generated if the gas connecting portion 99 is provided.

As shown in FIG. 10, the inner ring spacer 108 may be omitted from the configuration of FIG. 9. Instead of the inner ring spacer, the rotary shaft 21 itself may include the annular protrusion 109 that is received in the circumferential groove 105, and the gap to be measured **g** may be formed between the right side face of the annular protrusion 109 and the left side face of the wall of the circumferential groove 105. In this configuration, the problem of misalignment between the center of the rotary shaft 21 and the center of the inner ring spacer would not occur, unlike the first and second embodiments in which the inner ring spacer that rotates with the rotary shaft 21 is used. Thus, it is possible to increase the shape accuracy of the gap to be measured **g**.

Although not shown, the gas collection grooves for collecting the compressed gas and the gas discharge passages for discharging the compressed gas to the outside, which are described in the second embodiment, are also provided in the third embodiment.

### Fourth Embodiment

Next, a description will be given with reference to FIG. 11 for a fourth embodiment of the bearing device according to the present invention.

The gas connecting portion in the first to third embodiments is replaced with a flexible tube in the fourth embodiment.

That is, in the fourth embodiment, as shown in FIG. 11, the gas connecting portion 66 in the first embodiment is omitted. In place of this gas connecting portion, the flexible tube 111 is used, as a gas direction converting unit, to connect the compressed gas injection nozzle 62 of the outer ring spacer 36 to the compressed gas supply passage 64 of the small outer diameter portion 12a of the housing 11. As shown in FIG. 11, the flexible tube 111 has tube fittings 112 and 113 at both ends thereof. The tube fittings 112 and 113 have male threaded portions at free ends thereof, and are attached while maintaining airtightness.

On the other hand, a female threaded portion 114 is formed in the outer ring spacer 36 such that the female threaded portion 114 communicates with the compressed gas injection nozzle 62 and the male threaded portion of the tube fitting 112 is screwed into the female threaded portion.

Further, the small outer diameter portion 12a has an L-shaped space portion 115 therein for receiving the flexible tube 111. A female threaded portion 116 is formed between the space portion 115 and an upper portion of the end of the compressed gas supply passage 64 such that male threaded portion of the tube joint 113 is screwed into the female threaded portion 116.

The tube joint 112 of the flexible tube 111 is screwed into the female screw portion 114 of the outer ring spacer 36, and the other tube joint 113 of the flexible tube 111 is screwed into the female screw portion 116 of the small outer diameter portion 12a. Therefore, the compressed gas supply passage 64 is connected to the gas passage 36e and the compressed gas injection nozzle 62 by the flexible tube 111.

According to the fourth embodiment, since the flexible tube 111 is employed instead of the gas connection 66, it is possible to easily couple the compressed gas supply passage 64 with the compressed gas injection nozzle 62 without using the gas connection 66 having the complicated structure. Therefore, the tolerance to the circumferential phase error between the housing 11 and the outer ring spacer 36 is increased, and it is possible to alleviate the manufacturing difficulty.

It should be noted that although not shown in the drawings, the gas collection grooves for collecting the compressed gas and the gas discharge passages for discharging the compressed gas to the outside, which are described in the second embodiment, are also formed in the fourth embodiment.

### Fifth Embodiment

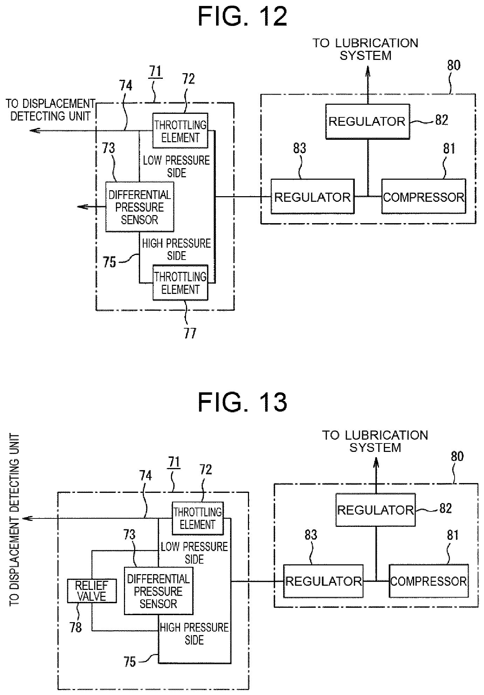

Next, a description will be given with reference to FIG. 12 for a fifth embodiment of the bearing device according to the present invention.

The fifth embodiment intends to prevent excessive differential pressure from being applied to the differential pressure sensor 73 of the pressure loss measuring unit 71.

That is, in the fifth embodiment, as shown in FIG. 12, a throttling element 77 is disposed in a pipe 75 that connects the high-pressure side of the differential pressure sensor 73 of the pressure loss measuring unit 71 of the first embodiment to the regulator 83 in order to adjust the rising time of the compressed gas pressure in accordance with the rising edge of the compressed gas pressure on the downstream side of the throttling element 72.

The operation of the fifth embodiment will be described.

As in the above-described first embodiment, when the high-pressure side of the differential pressure sensor 73 is directly connected to the regulator 83 by the pipe 75, the high-pressure side of the differential pressure sensor 73 is supplied with the compressed air having the fast (early) rising, which is supplied from the regulator 83, as the compressor 81 is activated to start supplying the compressed gas having the preset pressure to the pressure loss measuring unit 71 from the regulator 83. Therefore, the high-pressure side of the differential pressure sensor 73 can reach the preset (predetermined) pressure in shorter rise time.

In contrast, if the throttling element 72 is disposed in the pipe 74, the displacement detecting unit 61 is connected to the downstream side of the throttling element 72 through the compressed gas supply passages 65 and 64 in the housing 11. Thus, the distance to the compressed gas injection nozzle 62 of the displacement detecting unit 61 is long, and the distance depends on the structure of the spindle apparatus 10, i.e., the distance is not constant. Therefore, immediately after starting the supply of the compressed gas to the throttling element 72, the rising of the compressed gas at the downstream side of the throttling element 72 is slow. Consequently, it takes time for the compressed gas to rise (increase the pressure) at the low-pressure side of the differential pressure sensor 73.

Therefore, immediately after starting the supply of the compressed gas to the pressure loss measuring unit 71, the differential pressure between the high-pressure side and the low-pressure side of the differential pressure sensor 73 can be excessively large and beyond a standard value (specified value). This adversely affects the differential pressure sensor 73.

To deal with this in the fifth embodiment, when the supply of the compressed gas to the pressure loss measuring unit 71 starts, the throttling element 77 is present in the pipe 75 that connects the regulator 83 to the high-pressure side of the differential pressure sensor 73. Therefore, the throttling element 77 can delay the pressure rising speed of the compressed gas to the standard pressure at the high-pressure side of the differential pressure sensor 73. As a result, immediately after starting the supply of the compressed gas to the pressure loss measuring unit 71, it is possible to prevent the differential pressure between the high-pressure side and the low-pressure side of the differential pressure sensor 73 from becoming greater than the standard pressure, i.e., from becoming excessively large.

In this configuration, the rise time (pressure rising speed) of the compressed gas at the high-pressure side of the differential pressure sensor 73 adjusted by the throttling element 77 is not necessarily exactly the same as the rise time of the compressed gas at the throttling element 72. It is satisfactory as long as the differential pressure between the high-pressure side and the low pressure side of the differential pressure sensor 73 falls within a predetermined range immediately after starting the supply of the compressed gas to the pressure loss measuring unit 71 from the regulator 83.

In the fifth embodiment, the throttling element 77 is disposed in the pipe 75 that extends between the high-pressure side of the differential pressure sensor 73 and the regulator 83, and this prevents the differential pressure between the high-pressure side and the low-pressure side of the differential pressure sensor 73 from becoming excessively large, i.e., becoming larger than the standard value. It should be noted, however, that the present invention is not limited to the above-described configuration. As shown in FIG. 13, the throttling element 77 of FIG. 12 may be omitted, and the relief valve 78 may be connected in parallel with the differential pressure sensor 73. In this configuration, when the differential pressure between the high-pressure side and the low-pressure side of the differential pressure sensor 73 exceeds the standard value, the compressed gas of the high-pressure side of the differential pressure sensor 73 is discharged to the atmosphere by the relief valve 78. This prevents the differential pressure between the high-pressure side and the low-pressure side of the differential pressure sensor 73 from exceeding the standard value.

In the foregoing description, the fifth embodiment is applied to the first embodiment. It should be noted that the fifth embodiment may also be applied to any of the second embodiment to the fourth embodiment already described herein. Further, the fifth embodiment may be applied to any of the embodiments described hereafter in the specification.

### Sixth Embodiment

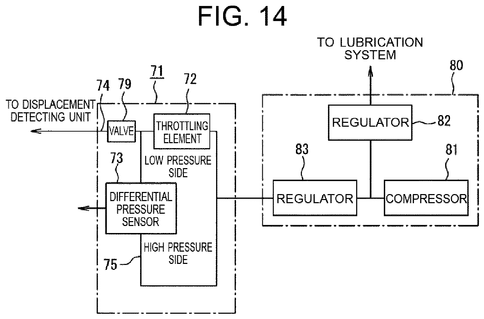

Next, a sixth embodiment of the bearing device according to the present invention will be described with reference to FIG. 14.

The sixth embodiment is designed to alleviate (reduce) an overload on the differential pressure sensor 73, which is caused by the difference between the rise time of the high-pressure side and the rise time of the low-pressure side in the first embodiment.

To this end, the pressure loss measuring unit 71 of the sixth embodiment has a valve 79 disposed in the pipe 74 that connects the opening of the compressed gas supply passage 65 formed in the housing 11 to the regulator 83, as shown in FIG. 14. The valve 79 is disposed in the pipe 74 at a position closer to the compressed gas supply passage 65 (displacement detecting unit 61) than the connecting portion between the pipe 74 and the pipe 75. In other words, the valve 79 is provided in the pipe 74 at a position downstream of the connecting portion between the pipe 74 and the pipe 75.

In the sixth embodiment, the compressed gas is supplied with the valve 79 being closed so that the internal pressure of the pressure loss measuring unit 71 is increased in advance, and then the pressure loss measurement is started by opening the valve 79. This can alleviate the overload on the differential pressure sensor 73 due to the rise time difference between the high-pressure side and the low-pressure side.

In the foregoing description, the sixth embodiment is applied to the first embodiment, but the sixth embodiment can be applied to any of the second embodiment to the fifth embodiment already described herein. Also, the sixth embodiment can be applied to all of the embodiments described hereafter in this specification.

### Seventh Embodiment

The seventh embodiment of the bearing device according to the present invention will now be described with reference to FIG. 1, FIG. 4, FIG. 15 and FIG. 16.

The seventh embodiment is a modification to the second embodiment (FIG. 4). The following description will mainly describe the differences from the second embodiment. In the following description, the same configuration as the second embodiment will be given the same reference numerals and symbols, and the description thereof will be omitted.

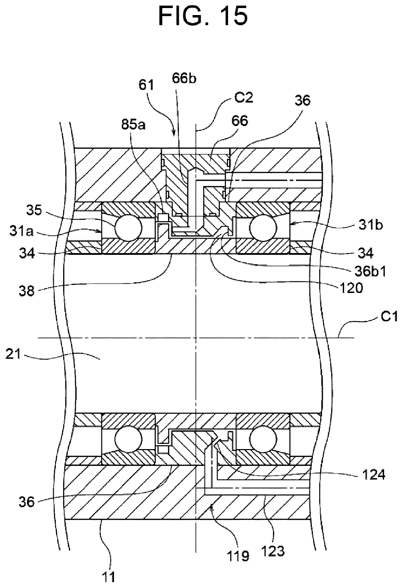

In the seventh embodiment, the following configuration will be described: the compressed gas is supplied to the displacement detecting unit 61 through the compressed gas supply system or line for displacement detection, and the lubrication oil is supplied to the front rolling bearing 31b through a different supply line from the compressed gas supply line designed for displacement detection. In this embodiment, the compressed gas is utilized when supplying the lubrication oil. The compressed gas supplied from the compressed gas supply unit 80 shown in FIG. 1 is utilized to supply the lubrication oil to the front rolling bearing 31b by means of oil-air lubrication or oil-mist lubrication. The single-dot chain line C1 in FIG. 15 shows the center axis of the rotary shaft 21. The single-dot chain line C2 perpendicular to the single-dot chain line C1 is a line passing through the center of the gas passage 66b. In this embodiment, it is assumed that the bearing lubrication is carried out by means of oil-air lubrication, but any bearing lubrication is satisfactory as long as the bearing lubrication utilizes the compressed gas and the lubricant, such as oil-air lubrication or oil-mist lubrication. In the following description, the combination of the lubrication oil and the compressed gas for lubrication oil supply is referred to as oil-air. The supply source of the compressed gas used when supplying the lubrication oil to the bearing 31 may be a supply source provided separately from the compressed gas supply unit 80 shown in FIG. 1. To distinguish between the compressed gas used for displacement measurement and the compressed gas used for lubrication oil supply, the compressed gas used for lubrication oil supply may be referred to as a second compressed gas.

The upper side of the single-dot chain line C1 in FIG. 15 shows the displacement detecting unit 61. The displacement detecting unit 61 of this embodiment has a substantially the same structure as the displacement detecting unit 61 shown on the upper side of FIG. 4(a) described in the second embodiment. The difference between the second embodiment (FIG. 4(a)) and this embodiment lies in that the outer ring spacer 36 of this embodiment has an air reservoir (air pool) 120 on the right side of the single-dot chain line C2. The air reservoir 120 is a space (groove) for reducing the pressure of the oil-air. The air reservoir 120 is a recess formed in the outer ring spacer 36 between the gas passage 66b and the rolling bearing 31b to receive the flow-in of the second compressed gas (oil-air). It should be noted that the location of the gas passage 66b is the same as the location of the compressed gas injection nozzle 62 when viewed in the circumferential direction of the rotary shaft, and therefore the air reservoir 120 is the recess which is formed between the compressed gas injection nozzle 62 and the rolling bearing 31b and into which the second compressed gas flows. Thus, it can be said that the air reservoir 120 is formed in the outer ring spacer 36.

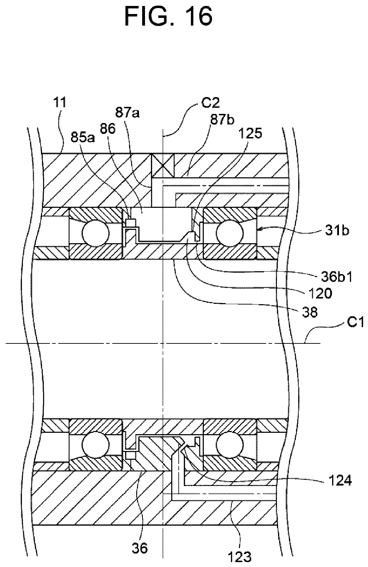

The air reservoir 120 is an annular groove extending in the circumferential direction of the rotary shaft 21. If FIG. 15 is compared with FIG. 4(a), it is understood that the air reservoir 120 of this embodiment is formed at a position that overlaps the gas collection groove 85b shown in FIG. 4(a). Thus, the air reservoir 120 of this embodiment is integral (united) with the gas collection groove 85b, i.e., it can be said that the air reservoir 120 is the gas collection groove 85b. As described above, when the groove of the air reservoir 120 is the gas collection groove 81b (if the air reservoir 120 and the gas collection groove 81b share the same groove), such groove is referred to as a common groove 125 (FIG. 16). The compressed gas supplied for displacement detection flows in the common groove 125, and the oil-air (second compressed gas) also flows in the common groove 125.

Between the air reservoir 120 and the front rolling bearing 31b, located is a portion 36b1 of the inner peripheral side ring portion 36b of the outer ring spacer 36. In this embodiment, since the oil-air entering the air reservoir 120 is depressurized and decelerated in the air reservoir 120, the noises due to the supply of the oil-air are reduced by the air reservoir 120. More specifically, the oil-air entering the air reservoir 120 reduces its pressure and its speed in the air reservoir 120, and therefore the wind noises caused by the rolling elements and the rolling element case of the bearing 31b are reduced when the oil-air is supplied to the bearing 31b.

The lower side of the single-dot chain line C1 in FIG. 15 shows a main portion of the lubricant line 119 for supplying the lubrication oil to the front rolling bearing 31b. The lower side of the single-dot chain line C1 in FIG. 15 is a cross-sectional view in a different phase from the lower side of FIG. 4(a). The "phase" is an angular location about a center of the rotary shaft when viewed in the axial direction of the rotary shaft 21 as shown in FIG. 4(b).

As shown in FIG. 15, the lubrication line 119 has an oil-air supply passage 123 and an oil-air injection nozzle 124. The oil-air injection nozzle 124 is open to the air reservoir 120. The oil-air is supplied to the lubrication line 119. The lubrication line 119 is a lubricant supply unit for supplying the lubrication oil (lubricant) to the front rolling bearing 31b.

The oil-air injection nozzle 124 is formed at the downstream end of the oil-air supply passage 123, and the transverse cross-section of the oil-air injection nozzle 124 is smaller than the transverse cross-section of the oil-air supply passage 123. That is, the oil-air passing through the oil-air supply passage 123 flows in the oil-air injection nozzle 124 having a small cross-sectional area, so that the oil-air is throttled.

The oil-air supply passage 123 extends through the housing 11 and the outer ring spacer 36. More specifically, as shown in FIG. 15, the upstream portion of the oil-air supply passage 123 extends in the housing 11 in parallel to the single-dot chain line C1. In the vicinity of the single-dot chain line C2, the oil-air supply passage 123 is turned 90 degrees inward in the radial direction of the rotary shaft 21 and the oil-air supply passage 123 extends to the oil-air injection nozzle 124. Therefore, the oil-air entering the oil-air supply passage 123 flows through the oil-air supply passage 123, and is supplied to the air reservoir 120 from the oil-air injection nozzle 124.

The oil-air entering the air reservoir 120 is depressurized and decelerated in the air reservoir 120, and then flows in a gap between the portion 36b1 of the inner peripheral side ring portion 36b and the inner ring spacer 38 such that the oil-air is supplied to the front rolling bearing 31b. In this embodiment, since the oil-air entering the air reservoir 120 reduces its pressure and speed, the noises due to the oil-air lubrication (wind noises caused by the rolling elements and the rolling element cases of the bearings 31a and 31b) are reduced, as compared with the configuration that does not have the air reservoir 120.

The lubrication line 119 is provided in a phase (location) different from the displacement measuring unit 61.

As shown in FIG. 15, the portion 36b1 of the inner peripheral side ring portion 36b is located between the air reservoir 120 and the front rolling bearing 31b. Thus, the oil-air (lubrication oil) entering the air reservoir 120 is not directly sprayed onto the front rolling bearing 31b. After the oil-air is depressurized and decelerated by the air reservoir 120 provided in the outer ring spacer 36, the oil-air is supplied to the front rolling bearing 31b.

FIG. 16 is a cross-sectional view of the bearing device of this embodiment when viewed in a different phase from FIG. 15. Specifically, the upper side of the single-dot chain line C1 in FIG. 16 is a cross-sectional view in a phase to show the cavity 86 and the gas discharge passages 87a and 87b. The lower side of the single-dot chain line C1 in FIG. 16 is the same as the lower side of the single-dot chain line C1 in FIG. 15.

As shown on the upper side of the single-dot chain line C1 in FIG. 16, the gas discharge passages 87a and 87b are formed in the housing 11. Further, the right portion of the cavity 86 is in communication with the air reservoir 120. In this embodiment, the air reservoir 120 is united with the gas collection groove 85b (FIG. 4(b)) to form the common groove 125. It should be noted that similar to the second embodiment, the gas collection groove 85a is in communication with the cavity 86 in FIG. 16.

Since the gas collection groove 85b is united with the air reservoir 120 to become the common groove 125, it can be said that the air reservoir 120 has an air collection function. If such configuration is employed, it is possible to effectively use the space in the axial direction of the rotary shaft 21, as compared with a configuration of providing the air reservoir 120 and the gas collection groove 85b separately.

The compressed gas injected from the compressed gas injection nozzle 62 flows through the air reservoir 120 and reaches the bearing 31b. As a result, some of the compressed gas (for displacement detection), which would otherwise be simply discharged from the cavity 86 to the outside through the gas discharge passages 87a and 87b, is caused to flow into the front rolling bearing 31b, and the pressure of the compressed gas supplied for displacement detection becomes the pressure that pushes the oil-air (lubrication oil) toward the front rolling bearing 31b. That is, the compressed gas used for displacement detection can be reused as auxiliary air to assist the lubrication oil supply to the front rolling bearing 31b.

Also, the air reservoir 120 of this embodiment has the gas collection function in addition to the originally imparted function of the air reservoir 120. The air reservoir 120, which possesses the two functions in this manner, is referred to as the common groove 125 in this embodiment.

It should be noted that although the common groove 125 is provided only on the right side of the single-dot chain line C2 in FIG. 16, the common groove may also be provided on the left side of the single-dot chain line C2. Alternatively, the common groove 125 may be provided only on the left side of the single-dot chain line C2 while not providing the common groove on the right side of the single-dot chain line C2.

### First Modification

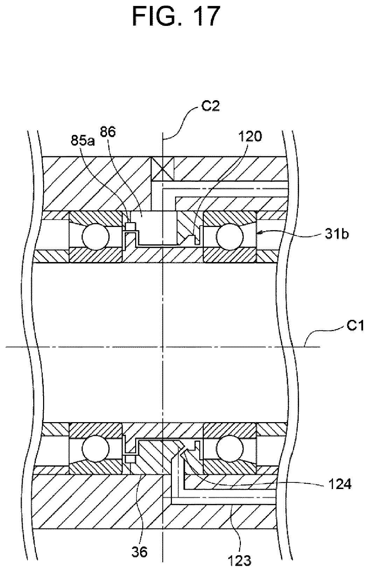

The right portion of the cavity 86 communicates with the air reservoir 120 in FIG. 16, but the right portion of the cavity 86 may not communicate with the air reservoir 120. Such configuration will be described, as a first modification to the seventh embodiment, with reference to FIG. 17. FIG. 17 is a cross-sectional view in the same phase as FIG. 16. The lower side of the single-dot chain line C1 in FIG. 17 is the same view as the lower side of the single-dot chain line C1 in FIG. 16. In the following description, the differences between the upper side of the single-dot chain line C1 in FIG. 17 and the upper side of the single-dot chain line C1 in FIG. 16 will be described.

As shown in FIG. 17, the cavity 86 of this modification is smaller on the right side of the single-dot chain line C2, as compared with the cavity 86 in FIG. 16. In this modification, the cavity 86 does not communicate with the air reservoir 120. Consequently, the compressed gas used for displacement detection tends to flow more actively into the gas collection groove 85a (an amount of gas flowing into the air reservoir 120 significantly decreases). Some of the compressed gas that flows into the gas collection groove 85a (compressed gas used for displacement detection) also flows into the bearing 31a and is reused as the auxiliary air (assisting air) to facilitate the lubrication oil supply while preventing the lubrication oil from entering the displacement detection unit 61.

### Second Modification

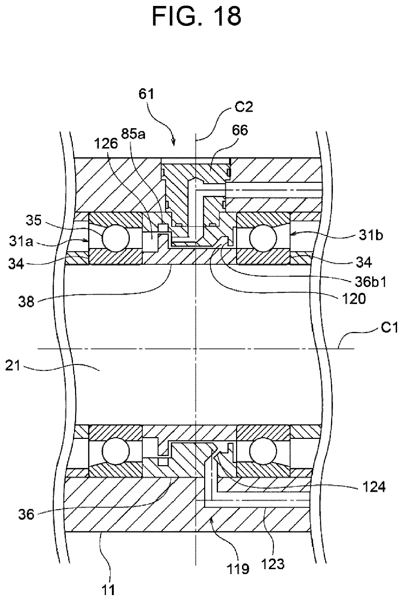

FIG. 18 shows a second modification to the seventh embodiment. The difference between the second modification and the configuration shown in Fig. 15 lies in that a space 126 is formed on the right of the front rolling bearing 31a. The space 126 formed on the right of the front rolling bearing 31a is a spaced formed as the inner ring spacer 38 is elongated to the left as compared with FIG. 15. The compressed gas for measurement flows to the bearing 31a through the space 126. The compressed gas for measurement flows in the space 126 and is depressurization and deceleration in the space 126. It is possible to control the degree of the depressurizing and decelerating by appropriately altering the size of the space 126, and effectively enhance the effect of the auxiliary air and the effect of preventing the reverse flow (counterflow) of the lubrication oil to the displacement detecting unit 61.

It should be noted that the phase (locations) of the displacement detecting unit 61 and the oil-air injection nozzle 124 around the center axis of the rotary shaft (when viewed in the axial direction of the rotary shaft 21 as in FIG. 4(b)) are not limited to the illustrated locations in the configurations shown in FIG. 15 to FIG. 18. Nevertheless, it is preferred that the phase (location) of the oil-air injection nozzle 124 around the center axis of the rotary shaft does not overlap the locations of the displacement detecting unit 61 and the cavity 86 when viewed in the axial direction of the rotary shaft.

Also, it is preferred that the phase (location) of the oil-air injection nozzle 124 around the center axis of the rotary shaft is spaced from the phase (location) of the displacement detecting unit 61 ten degrees or more in the circumferential direction when viewed in the axial direction of the rotary shaft 21. This is preferred to efficiently reduce the pressure of the oil-air of the oil-air injection nozzle 124 and the pressure of the compressed air of the displacement detecting unit 61.

If the axial dimension of the outer ring spacer 36 is large, the air reservoir 120 and the gas collection groove 85b may be separately formed in the outer ring spacer 36. If the axial dimension of the outer ring spacer 36 is large, the air reservoir 120 and the gas collection groove may be independently formed in the outer ring spacer 36 on the right side (or the left side) of the single-dot chain line C2 or may be formed on both sides of the single-dot chain line C2.

### Eighth Embodiment

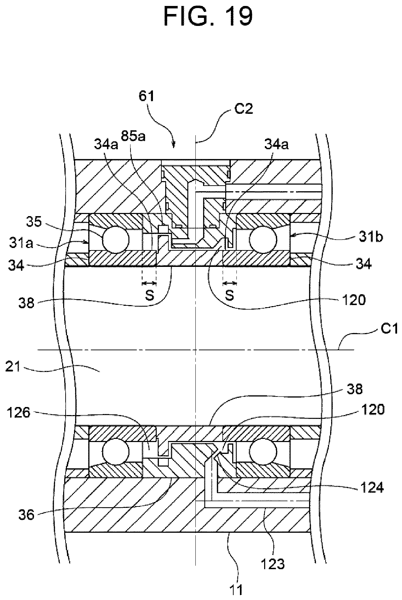

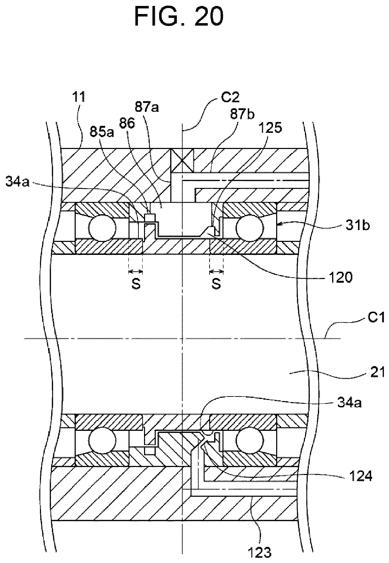

An eighth embodiment of the bearing device according to the present invention will be described with reference to FIG. 19 and FIG. 20.

Similar to the seventh embodiment, the eighth embodiment supplies the compressed gas to the displacement detecting unit 61 through the compressed air supply line designed for displacement detection, and supplies the lubrication oil (oil-air) to the front rolling bearing 31b through a feed line different from the compressed gas supply line designed for displacement detection. The following description will mainly describe the differences from the seventh embodiment. In the following description, the same configuration as the seventh embodiment will be given the same reference numerals and symbols, and the description thereof will be omitted.

The eighth embodiment has substantially the same configuration as the second modification (FIG. 18) to the seventh embodiment. When the eighth embodiment is compared with the configuration shown in FIG. 18, the shape of the inner ring 34 of the front rolling bearing (31a, 31b) is different. Specifically, the inner ring 34 of the front rolling bearing 31 (31a, 31b) of FIG. 19 is elongated toward the single-dot chain line C2 by a predetermined amount S, as compared with the inner ring 34 of FIG. 18 (the dimension of the inner ring 34 of the eighth embodiment is larger than the inner ring of FIG. 18 in the rotation axis direction by the predetermined amount S). Further, the outer diameter of the inner ring 34 (the diameter of the outer peripheral surface 34a) gradually decreases toward the single-dot chain line C2 from the ball 35. For example, on the left side of the single-dot chain line C2 in FIG. 19, the outer peripheral surface 34a of the inner ring 34 slightly inclines to the lower right, as it goes from the ball 35 toward the single-dot chain line C2 (because the outer diameter of the inner ring 34 becomes smaller). Since the dimension of the inner ring 34 in the direction of the single-dot chain line C1 is increased, the dimension of the inner ring spacer 38 is correspondingly reduced. It should be noted that the configuration in which the outer diameter of the inner ring 34 decreases as it goes from the ball 35 toward the single-dot chain line C2 may be expressed as a configuration in which the outer diameter of the inner ring 34 increases as it goes toward the ball 35.

On the left side of the single-dot chain line C2 in FIG. 19, the oil-air is depressurized upon entering the space 126. After that, the oil-air is supplied to the bearing 31a. In this situation, the lubrication oil contained in the oil-air is caused to move along the outer peripheral surface 34a of the inner ring 34 by the centrifugal force generated upon the rotations of the rotary shaft 21, and the lubrication oil is eventually supplied to the balls 35. Therefore, according to this embodiment, it is possible to supply the lubrication oil to the balls 35 more efficiently than the configuration shown in FIG. 18.

On the right side of the single-dot chain line C2 in FIG. 19, the outer peripheral surface 34a of the inner ring 34 extends into the air reservoir 120. The oil-air injection nozzle 124 is directed to the outer peripheral surface 34a that extends into the air reservoir 120. Because the outer peripheral surface 34a of the inner ring 34 inclines, the lubrication oil contained in the oil-air, which is supplied toward the air reservoir 120 from the oil-air injection nozzle 124, is caused to move along the outer peripheral surface 34a of the inner ring 34 by the centrifugal force generated upon the rotations of the rotary shaft 21, and the lubrication oil is eventually supplied to the balls 35. Therefore, according to this embodiment, it is possible to supply the lubrication oil to the balls 35 more efficiently than the configuration shown in FIG. 18. Because the air reservoir 120 is also provided in the configuration of Fig. 19, the oil-air entering the air reservoir 120 is depressurized and decelerated in the air reservoir, and noises produced by the oil-air lubrication (wind noises produced by the rolling elements and the rolling element cases of the bearings 31a and 31b) are reduced by the air reservoir 120.

FIG. 20 is a cross-sectional view when viewed in a different phase from FIG. 19. Specifically, the upper side of the single-dot chain line C1 in FIG. 20 is a cross-sectional view in a phase to show the cavity 86 and the gas discharge passages 87a and 87b. The lower side of the single-dot chain line C1 in FIG. 20 is the same as the lower side of the single-dot chain line C1 in FIG. 19.

As shown on the upper side of the single-dot chain line C1 in FIG. 20, the gas discharge passages 87a and 87b are formed in the housing 11. Further, the right portion of the cavity 86 is in communication with the air reservoir 120. In this embodiment, the air reservoir 120 is united with the gas collection groove 85b (FIG. 4(b)) to form the common groove 125.

Since the gas collection groove 85b is united with the air reservoir 120 to become the single groove (common groove 125), it is possible to effectively use the space in the axial direction of the rotary shaft 21, as compared with a configuration of providing the air reservoir 120 and the gas collection groove 85b separately.

The compressed gas injected from the compressed gas injection nozzle 62 flows through the air reservoir 120 and reaches the bearing 31b. As a result, some of the compressed gas (for displacement detection), which would otherwise be simply discharged from the cavity 86 to the outside through the gas discharge passages 87a and 87b, is caused to flow into the front rolling bearing 31b, and the pressure of the compressed gas supplied for displacement detection becomes the pressure that pushes the oil-air (lubrication oil) toward the front rolling bearing 31b. That is, the compressed gas used for displacement detection can be reused as auxiliary air to facilitate the lubrication oil supply to the front rolling bearing 31b.

Also, the air reservoir 120 of this embodiment has the gas collection function in addition to the originally imparted function of the air reservoir 120. The air reservoir 120, which possesses the two functions in this manner, is referred to as the common groove 125 in this embodiment.

It should be noted that although the common groove 125 is provided only on the right side of the single-dot chain line C2 in FIG. 20, the common groove may also be provided on the left side of the single-dot chain line C2. Alternatively, the common groove 125 may be provided only on the left side of the single-dot chain line C2 while not providing the common groove on the right side of the single-dot chain line C2.

The phases (locations) of the displacement detecting unit 61 and the oil-air injection nozzle 124 around the center axis of the rotary shaft (when viewed in the axial direction of the rotary shaft 21 as in FIG. 4(b)) are not limited to particular locations. Nevertheless, it is preferred that the phase (location) of the oil-air injection nozzle 124 around the center axis of the rotary shaft does not overlap the phases (locations) of the displacement detecting unit 61 and the cavity 86 when viewed in the axial direction of the rotary shaft.

Also, it is preferred that the phase (location) of the oil-air injection nozzle 124 around the center axis of the rotary shaft 21 is spaced from the phase (location) of the displacement detecting unit 61 ten degrees or more in the circumferential direction when viewed in the axial direction of the rotary shaft 21. This is preferred to efficiently reduce the pressure of the oil-air of the oil-air injection nozzle 124 and the pressure of the compressed air of the displacement detecting unit 61.

### First Modification

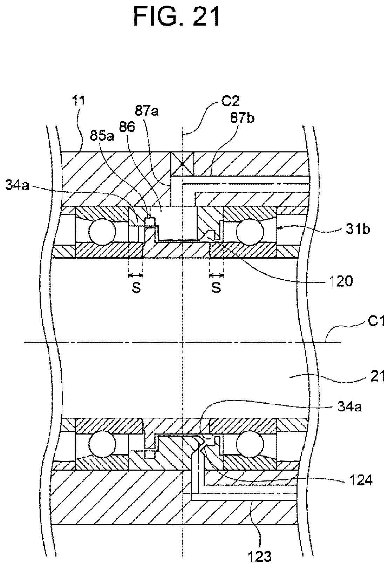

The right portion of the cavity 86 communicates with the air reservoir 120 in FIG. 20, but the right portion of the cavity 86 may not communicate with the air reservoir 120. Such configuration will be described, as a modification to the eighth embodiment, with reference to FIG. 21. FIG. 21 is a cross-sectional view in the same phase as FIG. 20. The lower side of the single-dot chain line C1 in FIG. 21 is the same view as the lower side of the single-dot chain line C1 in FIG. 20. In the following description, the differences between the upper side of the single-dot chain line C1 in FIG. 21 and the upper side of the single-dot chain line C1 in FIG. 20 will be described.

As shown in FIG. 21, the cavity 86 of this modification is smaller on the right side of the single-dot chain line C2, as compared with the cavity 86 in FIG. 20. In this modification, the cavity 86 does not communicate with the air reservoir 120.

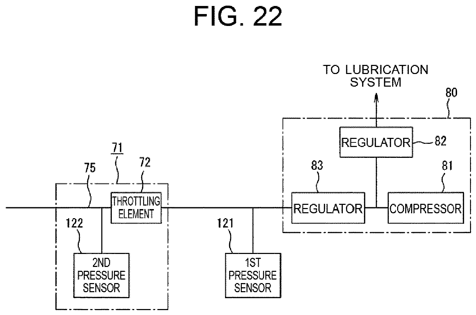

In the first to eighth embodiments, the configurations have been described in which the differential pressure sensor 73 is provided in the pressure loss measuring unit 71, but the present invention is not limited thereto. As shown in FIG. 22, the differential pressure sensor 73 may be omitted. In place of the differential pressure sensor, a first pressure sensor 121 may be provided on the output side of the regulator 83 and a second pressure sensor 122 for detecting the pressure at a position downstream of the throttling element 72 may be provided. In this configuration, it is possible to detect the differential pressure by subtracting the detected pressure of the second pressure sensor 122 of each pressure loss measuring unit from the original pressure of the compressed gas output from the regulator 83 detected by the first pressure sensor 121. As such a configuration is employed, the protection system of the differential pressure sensor 73 as in the above-described fifth embodiment is not required and the absolute pressure or gauge pressure of the compressed gas can be measured by the first pressure sensor 121 and the second pressure sensor 122. Thus, when the supply source pressure (original pressure) changes due to a certain trouble, it is possible to detect the change in the supply source pressure.

Although the gap to be measured **g** is formed in the vicinity of the front end of the outer ring spacer 36, 96 or the like and the compressed gas is injected to the gap **g** from the compressed gas injection nozzle 62, 97 in the first to eighth embodiments, the present invention is not limited to such configurations. The gap **g** may be formed in the vicinity of the rear end of the outer ring spacer 36, 96 or the like and the compressed gas may be injected to the gap **g** from the compressed gas injection nozzle 62, 97 to detect the displacement in the axial direction.

In the first to eighth embodiments, the displacement detecting unit 61 detects the displacement in the axial direction. The detection of the displacement in the axial direction only needs forming the gap to be measured **g** in the direction perpendicular to the axial direction of the rotary shaft 21 and injecting the compressed air into the gap to be measured **g** from the compressed gas injection nozzle 62. Thus, as described in connection with FIG. 2(b), providing the displacement detecting unit 61 at one location in the circumferential direction of the housing 11 is sufficient. Accordingly, there is a sufficient area to provide another displacement detecting unit (or units) in the circumferential direction of the housing 11.

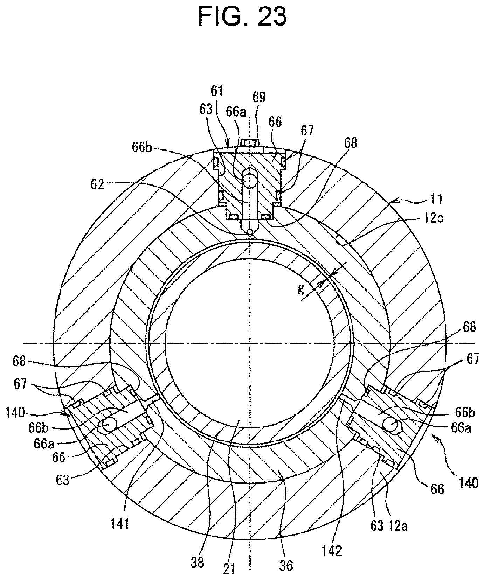

Consequently, as shown in FIG. 23, it is possible to provide two displacement detecting units 140 for detecting displacements in the radial direction, respectively, at positions spaced 120 degrees from the displacement detecting unit 61, which is designed to detect the displacement in the axial direction, in the circumferential direction.

The gap to be measured **g** by each of the displacement detecting units 140 is, for example, a gap between the outer ring spacer 36 and the inner ring spacer 38 of the first embodiment. A compressed gas injection nozzle 142 is provided such that the compressed gas injection nozzle 142 extends from the bottom of the recess 36c of the outer ring spacer 36 to the inner peripheral surface in the radial direction. The compressed gas injection nozzle 142 is connected to the pressure loss measuring unit 71 through the gas connecting portion 66 and the compressed gas supply passages 64 and 65.

By employing the above-described configuration, it is possible to obtain a detection value of the differential pressure, which corresponds to the displacement of the rotary shaft 21 in the radial direction, from the differential pressure sensor 73 of the pressure loss measuring unit 71. By supplying the detection value of the differential pressure to the arithmetic processing unit PU, it is possible to calculate the load exerted on the rotary shaft 21 in the following manner.

Specifically, the arithmetic processing unit PU calculates the displacement of the rotary shaft 21 in the radial direction, by means of conversion, based on the detection values of the differential pressure generated from the two pressure loss measuring units 71. The arithmetic processing unit PU multiplies the calculated displacement of the rotary shaft 21 in the radial direction by a shaft rigidity value at the position of the compressed gas injection nozzle 62, which is calculated in advance, to obtain an amount of load applied on the rotary shaft 21. The position of the compressed gas injection nozzle 62 is the position in the axial direction of the rotary shaft. The arithmetic processing unit PU sends the calculation result to the display DP to show the calculation result on the display. The shaft rigidity value is calculated based on the point of the load, the positions of the front rolling bearings 31, the bearing rigidity of each front rolling bearing, the shaft rigidity, the axial direction position of the compressed gas injection nozzle 62 of the displacement detection unit 61, and other factors.

The calculation of the load applied to the rotary shaft 21 is not limited to the above-described calculation. For example, a known load is applied to the rotary shaft 21 and a detection value of the differential pressure generated from the differential pressure sensor 73 of the pressure loss measuring unit 71 is measured. The load application and the differential pressure (detection value) measurement are repeated to prepare a load calculation map that represents the relationship between the load and the detection value the of the differential pressure. The load calculation map is stored in a memory of the arithmetic processing unit PU. In this configuration, it is possible to directly calculate the load from the detection value of the differential pressure by referring to the load calculation map based on the detection value of the differential pressure generated from the differential pressure sensor 73 during the cutting. If such calculation is used, it is not necessary to convert the detection value of the differential pressure of the differential pressure sensor 73 to the value of the displacement. Thus, the load calculation becomes easier. Instead of using the load calculation map, an equation of a characteristic curve of the load calculation map may be prepared, and a detection value of the differential pressure of the differential pressure sensor 73 may be substituted in the equation to calculate the load.

As described above, if the displacement detecting unit 61 for detecting the displacement in the axial direction and the displacement detecting units 140 for detecting the displacements in the radial direction are provided, it is possible to simultaneously detect the axial direction displacement and the radial direction displacements of the rotary shaft 21. In addition, because the compressed gas is supplied to the displacement detecting units 61 and 140 from the pressure loss measuring units 71, it is possible to connect the pressure loss measuring units 71 in parallel to the common compressed gas supply unit 80. Therefore, it is not necessary to provide compressed gas supply units 80 separately (respectively) for the pressure loss measuring units.

It should be noted that the single displacement detecting unit 61 and the two displacement detecting units 140 are provided at 120-degree intervals in the above-described configuration, but the present invention is not limited to such configuration. One or more displacement detecting units 61 and two or more displacement detecting units 140 may be arranged at appropriate phases (at appropriate locations in the circumferential direction of the rotary shaft), provided that if two displacement detecting units 140 are formed, the two displacement detecting units 140 do not face each other across the center of the rotary shaft. Such arrangement can detect the axial direction displacement and the radial direction displacement at the same time.

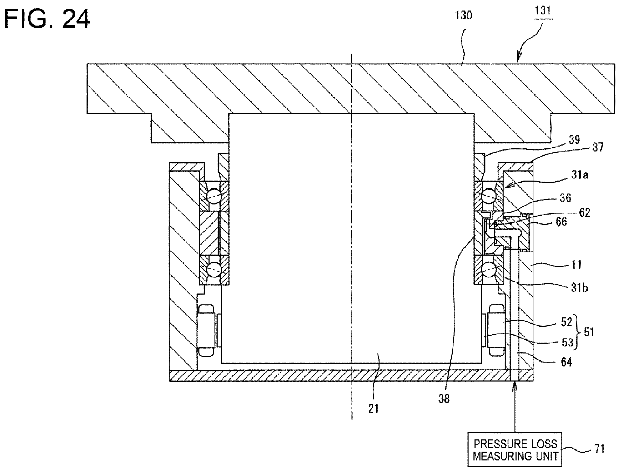

The first to eighth embodiments have described the configurations of applying the bearing devices according to the present invention to the spindle apparatus 10 of the machine tool, but use of the bearing devices of the present invention is not limited thereto. The bearing devices of the present invention may be applied to a rotary table device 131 of the machine tool in which a rotary table 130 is disposed on the upper end of the rotary shaft 21 as shown in FIG. 24, and may be applied to other machine tools. Those portions, components and parts of the configuration in FIG. 24 which correspond to the portions, components and parts of the configuration in FIG. 1, are denoted by the same reference numerals, and the detailed description thereof will be omitted.

Although specific embodiments have been described above, the embodiments are merely exemplary and are not intended to limit the scope of the present invention. The apparatus, devices and methods described in this specification can be embodied in other forms within the scope of the appended claims.

### REFERENCE NUMERALS AND SYMBOLS

10... Spindle apparatus of a machine tool, 11... Housing, 21... Rotating shaft, 31... Front rolling bearing, 31a, 31b... Angular contact ball bearing, 33... Outer ring, 34... Inner ring, 35... Ball, 36... Outer ring spacer, 38... Inner ring spacer, 41... Rear rolling bearing, 51... Drive motor, 52... Stator, 53... Rotor, 60... Displacement measuring unit, 61... Displacement detecting unit (axial direction), 62... Compressed gas injection nozzle, g... Gap to be measured, 64, 65... Compressed gas supply passage, 66... Gas connecting portion, 71... Pressure loss measuring unit, 72... Throttling element, 73... Differential pressure sensor, 74, 75... Pipe, 77... Throttling element, 78... Relief valve, 79... Valve, PU... Arithmetic processing unit, 80... Compressed gas supply unit, 81... Compressor, 82, 83... Regulator, 85a, 85b... Gas collection groove, 86... Cavity, 87a, 87b... Gas discharge passage, 88... Communicating groove, 91a, 91b... Groove, 92a, 92b... Conical surface, 93a, 93b... Groove, 96... Outer ring spacer, 97... Compressed gas injection nozzle, 99... Gas connecting portion, 101... Inner ring spacer, 106... Compressed gas injection nozzle, 107... Gas passage, 108... Inner ring spacer, 111... Flexible tube, 112, 113... Tube fitting, 114, 116... Female thread, 120... Air reservoir, 121... First pressure sensor, 122... Second pressure sensor, 124... Oil-air injection nozzle, 125... Common groove, 140... Displacement detecting unit (radial direction), 142... Compressed gas injection nozzle, 130... Rotating table, 131... Rotating table device for the machine tool

## Claims

1. A bearing device that supports a rotary member (21) to a fixed member (11) via a rolling bearing (31, 41) and comprises a displacement measuring unit (60) for measuring an axial direction displacement of the rotary member by supplying compressed gas into a gap to be measured (g) between the rotary member and the fixed member in the vicinity of the rolling bearing, the gap being formed between a surface of the rotary member and a surface of the fixed member, which face each other in an axial direction of the rotary member,
the displacement measuring unit (60) including at least one displacement detecting unit (61) having a compressed gas injection nozzle (62) for injecting compressed gas into the gap to be measured, and at least one pressure loss measuring unit (71) for measuring a pressure loss of the compressed gas supplied to the displacement detecting unit, each of the at least one displacement detecting unit having at least one gas collection groove (85a, 85b) for collecting the compressed gas injected into the gap to be measured from the compressed gas injection nozzle, the at least one gas collection groove being formed on one side or both sides of an axis of the compressed gas injection nozzle,
**characterized in that**:
an outer ring spacer (36) and an inner ring spacer (38) are disposed in contact with the rolling bearing (31) between the rotary member and the fixed member; and
the compressed gas injection nozzle of each said displacement detecting unit is formed in the outer ring spacer, and the gap to be measured is formed between the outer ring spacer and the inner ring spacer.

2. The bearing device according to claim 1, wherein each of the at least one displacement detecting unit further includes a compressed gas supply passage (64, 65) for supplying the compressed gas to the compressed gas injection nozzle (62).

3. The bearing device according to claim 1 or 2, wherein each of the at least one displacement detecting unit further includes a gas discharge unit (87a, 87b) for discharging the compressed gas collected in the at least one gas collection groove to an outside.

4. The bearing device according to claim 2, wherein a gas direction converting unit (66) for converting a direction of the compressed gas is provided between the compressed gas injection nozzle and the compressed gas supply passage.

5. The bearing device according to claim 4, wherein the gas direction converting unit includes a gas connecting portion (66) in which a gas passage for changing the direction of the compressed gas is formed.

6. The bearing device according to claim 4, wherein the gas direction converting unit includes a flexible tube (111) having tube fittings (112, 113) at both ends thereof.

7. The bearing device according to claim 1, wherein the compressed gas injection nozzle of each said displacement detecting unit is formed in the vicinity of the rolling bearing such that the compressed gas injection nozzle opens in an axial direction end face, and the gap to be measure is formed between an axial direction end face of the fixed member and an axial direction end face of the rotary member near the compressed gas injection nozzle.

8. The bearing device according to any one of claims 1 to 7, wherein the pressure loss measuring unit includes a throttling element (72) disposed in a compressed gas supply path configured to supply the compressed gas from a compressed gas supply unit (80) to each said displacement detecting unit, and the pressure loss measuring unit measures the pressure loss based on a differential pressure between the pressure of the compressed gas between the throttling element and the displacement detecting unit and the pressure of the compressed gas output from the compressed gas supply unit.

9. The bearing device according to claim 8, wherein the pressure loss measuring unit includes a differential pressure sensor (73) for measuring the differential pressure, and a low-pressure side of the differential pressure sensor is connected between the throttling element (72) and the displacement detecting unit and a high-pressure side of the differential pressure sensor is connected to the compressed gas supply unit (80).

10. The bearing device according to claim 9, wherein the pressure loss measuring unit includes a valve (79) disposed between the throttling element and the displacement detecting unit, and the valve is provided at a position closer to the displacement detecting unit than a connecting portion, to which the low-pressure side of the differential pressure sensor is connected, and configured to moderate an overload exerted on the differential pressure sensor due to a rise time difference between the high-pressure side and the low-pressure side.

11. The bearing device according to claim 9, wherein a throttling element (77) for adjusting a rise of pressure is provided between the high-pressure side of the differential pressure sensor and the compressed gas supply unit.

12. The bearing device according to claim 8, wherein the pressure loss measuring unit includes a first pressure sensor (121) for detecting the pressure of the compressed gas output from the compressed gas supply unit (80) and a second pressure sensor (122) for detecting the pressure of the compressed gas between the throttling element (72) and the displacement detecting unit, and the pressure loss measuring unit detects the differential pressure by subtracting a pressure detection value of the second pressure sensor from a pressure detection value of the first pressure sensor.

13. The bearing device according to any one of claims 8 to 12 comprising an arithmetic processing unit (PU) for calculating an axial load exerted on the rotary member based on the differential pressure detected by the pressure loss measuring unit.

14. The bearing device according to any one of claims 1 to 3 further comprising a lubricant supply unit (119) for supplying a lubricant to the rolling bearing together with a second compressed gas different from the compressed gas supplied for displacement measurement, and
wherein at least one recess (120) in which the second compressed gas flows is formed in the outer ring spacer between the compressed gas injection nozzle and the rolling bearing.

15. The bearing device according to claim 14, wherein each of the at least one recess (120) is a pressure reducing portion for reducing a pressure of the second compressed gas.

16. The bearing device according to claim 14 or 15, wherein the at least one recess (125) serves as the at least one gas collection groove.

17. The bearing device according to any one of claims 14 to 16, wherein the lubricant supply unit has a lubricant injection nozzle (124) which opens to the at least one recess formed in the outer ring spacer and injects the lubricant to the at least one recess together with the second compressed gas.

18. The bearing device according to any one of claims 14 to 17, wherein the bearing device includes a cavity (86) formed in the outer ring spacer and connected to a compressed gas discharge portion (87a, 87b) for discharging the compressed gas supplied for displacement measurement to an outside, and
when the at least one gas collection groove includes two gas collection grooves formed on both sides of the compressed gas injection nozzle, the cavity communicates with at least one of the two gas collection grooves.

19. The bearing device according to any one of claims 13 to 18, wherein the rolling bearing includes an inner ring (34), an outer ring (33), and a plurality of rolling elements (35) rotatably disposed between the inner ring and the outer ring, and
the inner ring has a larger dimension than the outer ring in an axial direction of the rotary member, and the inner ring has a portion whose diameter increases toward the rolling elements.

20. A machine tool spindle apparatus (10) comprising a bearing device according to any one of claims 1 to 19,
wherein the machine tool spindle apparatus uses the bearing device to rotatably support a main shaft (21) as the rotary member, and measures an axial load exerted on the main shaft.

## Patentansprüche

1. Lagervorrichtung, die ein drehbares Element (21) über ein Wälzlager (31, 41) an einem festen Element (11) abstützt und eine Verschiebungsmesseinheit (60) zum Messen einer Verschiebung des drehbaren Elements in axialer Richtung durch Zuführen von Druckgas in einen zu messenden Spalt (g) zwischen dem drehbaren Element und dem festen Element in der Nähe des Wälzlagers aufweist, wobei der Spalt zwischen einer Oberfläche des drehbaren Elements und einer Oberfläche des festen, stationären Elements ausgebildet ist, die einander in einer axialen Richtung des drehbaren Elements gegenüberliegen,
die Verschiebungsmesseinheit (60) mindestens eine Verschiebungs-Erfassungseinheit (61) mit einer Druckgaseinspritzdüse (62) zum Einspritzen von Druckgas in den zu messenden Spalt und mindestens eine Druckverlustmesseinheit (71) zum Messen eines Druckverlusts des der Verschiebungs-Erfassungseinheit zugeführten Druckgases aufweist, wobei jede der mindestens einen Verschiebungs-Erfassungseinheit mindestens eine Gassammelnut (85a, 85b) zum Sammeln des von der Druckgaseinspritzdüse in den zu messenden Spalt eingespritzten Druckgases aufweist, wobei die mindestens eine Gassammelnut auf einer Seite oder beiden Seiten einer Achse der Druckgaseinspritzdüse ausgebildet ist,
**dadurch gekennzeichnet, dass**:
ein äußerer Abstandsring (36) und ein innerer Abstandsring (38) in Kontakt mit dem Wälzlager (31) zwischen dem drehbaren Element und dem festen Element angeordnet sind;
und
die Druckgaseinspritzdüse jeder der Verschiebungs-Erfassungseinheiten im äußeren Abstandsring ausgebildet ist und der zu messende Spalt zwischen dem äußeren Abstandsring und dem inneren Abstandsring ausgebildet ist.

2. Lagervorrichtung nach Anspruch 1, wobei jede der mindestens einen Verschiebungs-Erfassungseinheit ferner einen Druckgas-Zufuhrkanal (64, 65) zum Zuführen des Druckgases zur Druckgaseinspritzdüse (62) aufweist.

3. Lagervorrichtung nach Anspruch 1 oder 2, wobei jede der mindestens einen Verschiebungs-Erfassungseinheit ferner eine Gasabgabeeinheit (87a, 87b) zum Abgeben des in der mindestens einen Gassammelnut gesammelten Druckgases nach außen aufweist.

4. Lagervorrichtung nach Anspruch 2, wobei zwischen der Druckgaseinspritzdüse und dem Druckgaszufuhrkanal eine Gasrichtungs-Umwandlungseinheit (66) zur Umwandlung einer Richtung des Druckgases vorgesehen ist.

5. Lagervorrichtung nach Anspruch 4, wobei die Gasrichtungs-Umwandlungseinheit einen Gasverbindungsabschnitt (66) aufweist, in dem ein Gasdurchlass zur Änderung der Richtung des komprimierten Gases ausgebildet ist.

6. Lagervorrichtung nach Anspruch 4, wobei die Gasrichtungs-Umwandlungseinheit einen flexiblen Schlauch (111) mit Schlauchanschlüssen (112, 113) an seinen beiden Enden aufweist.

7. Lagervorrichtung nach Anspruch 1, wobei die Druckgaseinspritzdüse jeder der Verschiebungs-Erfassungseinheiten in der Nähe des Wälzlagers so ausgebildet ist, dass sich die Druckgaseinspritzdüse in einer axialen Endfläche öffnet, und der zu messende Spalt zwischen einer axialen Endfläche des festen Elements und einer axialen Endfläche des drehbaren Elements in der Nähe der Druckgaseinspritzdüse ausgebildet ist.

8. Lagervorrichtung nach einem der Ansprüche 1 bis 7, wobei die Druckverlustmesseinheit ein Drosselelement (72) enthält, das in einem Druckgaszufuhrweg angeordnet ist, der konfiguriert ist, das Druckgas von einer Druckgaszufuhreinheit (80) zu jeder Verschiebungs-Erfassungseinheit zuzuführen, und die Druckverlustmesseinheit den Druckverlust basierend auf einem Differenzdruck zwischen dem Druck des Druckgases zwischen dem Drosselelement und der Verschiebungs-Erfassungseinheit und dem Druck des von der Druckgaszufuhreinheit abgegebenen Druckgases misst.

9. Lagervorrichtung nach Anspruch 8, wobei die Druckverlustmesseinheit einen Differenzdrucksensor (73) zur Messung des Differenzdrucks aufweist und eine Niederdruckseite des Differenzdrucksensors zwischen dem Drosselelement (72) und der Verschiebungs-Erfassungseinheit angeschlossen ist und eine Hochdruckseite des Differenzdrucksensors mit der Druckgaszufuhreinheit (80) verbunden ist.

10. Lagervorrichtung nach Anspruch 9, wobei die Druckverlustmesseinheit ein Ventil (79) aufweist, das zwischen dem Drosselelement und der Verschiebungs-Erfassungseinheit angeordnet ist, und das Ventil an einer Position vorgesehen ist, die näher an der Verschiebungs-Erfassungseinheit liegt als ein Verbindungsabschnitt, mit dem die Niederdruckseite des Differenzdrucksensors verbunden ist, und konfiguriert ist, eine auf den Differenzdrucksensor ausgeübte Überlast aufgrund einer Anstiegszeitdifferenz zwischen der Hochdruckseite und der Niederdruckseite zu dämpfen.

11. Lagervorrichtung nach Anspruch 9, wobei zur Einstellung eines Druckanstiegs zwischen der Hochdruckseite des Differenzdrucksensors und der Druckgaszufuhreinheit ein Drosselelement (77) vorgesehen ist.

12. Lagervorrichtung nach Anspruch 8, wobei die Druckverlustmesseinheit einen ersten Drucksensor (121) zum Erfassen des Drucks des von der Druckgaszufuhreinheit (80) abgegebenen Druckgases und einen zweiten Drucksensor (122) zum Erfassen des Drucks des Druckgases zwischen dem Drosselelement (72) und der Verschiebungs-Erfassungseinheit aufweist und die Druckverlustmesseinheit den Differenzdruck durch Subtrahieren eines Druckerfassungswerts des zweiten Drucksensors von einem Druckerfassungswert des ersten Drucksensors erfasst.

13. Lagervorrichtung nach einem der Ansprüche 8 bis 12, die eine arithmetische Verarbeitungseinheit (PU) aufweist, um eine auf das drehbare Element ausgeübte Axiallast basierend auf dem von der Druckverlustmesseinheit erfassten Differenzdruck zu berechnen.

14. Lagervorrichtung nach einem der Ansprüche 1 bis 3, die ferner eine Schmiermittel-Zufuhreinheit (119) aufweist, zum Zuführen eines Schmiermittels zum Wälzlager zusammen mit einem zweiten Druckgas, das sich von dem Druckgas unterscheidet, das für die Verschiebungsmessung zugeführt wird, und
wobei mindestens eine Vertiefung (120), in der das zweite Druckgas strömt, im äußeren Abstandsring zwischen der Druckgaseinspritzdüse und dem Wälzlager ausgebildet ist.

15. Lagervorrichtung nach Anspruch 14, wobei jede der mindestens einen Vertiefung (120) ein Druckreduzierabschnitt zur Reduzierung eines Drucks des zweiten Druckgases ist.

16. Lagervorrichtung nach Anspruch 14 oder 15, wobei die mindestens eine Vertiefung (125) als mindestens eine Gassammelnut dient.

17. Lagervorrichtung nach einem der Ansprüche 14 bis 16, wobei die Schmiermittel-Zufuhreinheit eine Schmiermittel-Einspritzdüse (124) aufweist, die sich zu der mindestens einen Vertiefung öffnet, die im äußeren Abstandsring ausgebildet ist, und das Schmiermittel zusammen mit dem zweiten Druckgas in die mindestens eine Aussparung einspritzt.

18. Lagervorrichtung nach einem der Ansprüche 14 bis 17, wobei die Lagervorrichtung einen Hohlraum (86) aufweist, der im äußeren Abstandsring ausgebildet und mit einem Druckgasabgabeabschnitt (87a, 87b) verbunden ist, um das zur Verschiebungsmessung zugeführte Druckgas nach außen abzugeben, und
wenn die mindestens eine Gassammelnut zwei Gassammelnuten aufweist, die auf beiden Seiten der Druckgaseinspritzdüse ausgebildet sind, der Hohlraum mit mindestens einer der beiden Gassammelnuten in Verbindung steht.

19. Lagervorrichtung nach einem der Ansprüche 13 bis 18, wobei das Wälzlager einen Innenring (34), einen Außenring (33) und eine Vielzahl von Wälzkörpern (35) aufweist, die drehbar zwischen dem Innenring und dem Außenring angeordnet sind, und
der Innenring eine größere Abmessung als der Außenring in einer axialen Richtung des drehbaren Elements aufweist und der Innenring einen Abschnitt aufweist, dessen Durchmesser in Richtung der Wälzkörper zunimmt.

20. Werkzeugmaschinen-Spindelvorrichtung (10), die eine Lagervorrichtung nach einem der Ansprüche 1 bis 19 aufweist, wobei die Werkzeugmaschinen-Spindelvorrichtung die Lagervorrichtung verwendet, um eine Hauptwelle (21) als das drehbare Element drehbar zu lagern, und eine auf die Hauptwelle ausgeübte Axiallast misst.

## Revendications

1. Dispositif de palier, supportant un élément rotatif (21) sur un élément fixe (11) au moyen d'un palier à roulement (31, 41) et comprenant une unité de mesure de déplacement (60) pour la mesure d'un déplacement en direction axiale de l'élément rotatif par refoulement de gaz comprimé dans un interstice à mesurer (g) entre l'élément rotatif et l'élément fixe à proximité du palier à roulement, ledit interstice étant formé entre une surface de l'élément rotatif et une surface de l'élément stationnaire, lesquelles se font face dans la direction axiale de l'élément rotatif,
l'unité de mesure de déplacement (60) comprenant au moins une unité de détection de déplacement (61) pourvue d'une buse d'injection de gaz comprimé (62) pour l'injection de gaz comprimé dans l'interstice à mesurer, et au moins une unité de mesure de perte de pression (71) pour la mesure d'une perte de pression du gaz comprimé refoulé vers l'unité de détection de déplacement, chacune des au moins une unité de détection de déplacement présentant au moins une rainure de récupération de gaz (85a, 85b) pour recueillir le gaz comprimé injecté dans l'interstice à mesurer par la buse d'injection de gaz comprimé, ladite au moins une rainure de récupération de gaz étant formée sur un côté ou sur les deux côtés d'un axe de la buse d'injection de gaz comprimé,
**caractérisé en ce que** :
une pièce d'espacement (36) de bague extérieure et une pièce d'espacement (38) de bague intérieure sont disposées en contact avec le palier à roulement (31) entre l'élément rotatif et l'élément fixe ; et
la buse d'injection de gaz comprimé de chaque unité de détection de déplacement est formée dans la pièce d'espacement de bague extérieure, et l'interstice à mesurer est formé entre la pièce d'espacement de bague extérieure et la pièce d'espacement de bague intérieure.

2. Dispositif de palier selon la revendication 1, où chacune desdites au moins une unité de détection de déplacement comprend en outre un passage de refoulement de gaz comprimé (64, 65) pour refouler le gaz comprimé vers la buse d'injection de gaz comprimé (62).

3. Dispositif de palier selon la revendication 1 ou la revendication 2, où chacune desdites au moins une unité de détection de déplacement comprend en outre une unité d'évacuation de gaz (87a, 87b) pour évacuer vers l'extérieur le gaz comprimé recueilli dans ladite au moins une rainure de récupération de gaz.

4. Dispositif de palier selon la revendication 2, où une unité de conversion de direction du gaz (66) pour changer la direction du gaz comprimé est prévue entre la buse d'injection de gaz comprimé et le passage de refoulement de gaz comprimé.

5. Dispositif de palier selon la revendication 4, où l'unité de conversion de direction du gaz comprend une partie de connexion de gaz (66) où est formé un passage de gaz pour changer la direction du gaz comprimé.

6. Dispositif de palier selon la revendication 4, où l'unité de conversion de direction du gaz comprend un tuyau flexible (111) avec des raccords de tuyau (112, 113) à ses deux extrémités.

7. Dispositif de palier selon la revendication 1, où la buse d'injection de gaz comprimé de chaque unité de détection de déplacement est formée à proximité du palier à roulement, de telle manière que la buse d'injection de gaz comprimé s'ouvre sur une face d'extrémité de direction axiale, et l'interstice à mesurer est formé entre une face d'extrémité de direction axiale de l'élément fixe et une face d'extrémité de direction axiale de l'élément rotatif à proximité de la buse d'injection de gaz comprimé.

8. Dispositif de palier selon l'une des revendications 1 à 7, où l'unité de mesure de perte de pression comprend un élément d'étranglement (72) disposé sur un chemin de refoulement de gaz comprimé prévu pour refouler le gaz comprimé d'une unité de refoulement de gaz comprimé (80) vers chaque unité de détection de déplacement, et l'unité de mesure de perte de pression mesure la perte de pression sur la base d'une pression différentielle entre la pression du gaz comprimé entre l'élément d'étranglement et l'unité de détection de déplacement et la pression du gaz comprimé sortant de l'unité de refoulement de gaz comprimé.

9. Dispositif de palier selon la revendication 8, où l'unité de mesure de perte de pression comprend un capteur de pression différentielle (73) pour mesurer la pression différentielle, et un côté basse pression du capteur de pression différentielle est raccordé entre l'élément d'étranglement (72) et l'unité de détection de déplacement, et un côté haute pression du capteur de pression différentielle est raccordé à l'unité de refoulement de gaz comprimé (80).

10. Dispositif de palier selon la revendication 9, où l'unité de mesure de perte de pression comprend une vanne (79) disposée entre l'élément d'étranglement et l'unité de détection de déplacement, et la vanne est prévue à un emplacement plus proche de l'unité de détection de déplacement qu'une partie de raccordement à laquelle est raccordé le côté basse pression du capteur de pression différentielle, et est prévue pour diminuer une surcharge exercée sur le capteur de pression différentielle en raison d'une différence de temps de montée entre le côté haute pression et le côté basse pression.

11. Dispositif de palier selon la revendication 9, où un élément d'étranglement (77) pour régler une montée en pression est prévu entre le côté haute pression du capteur de pression différentielle et l'unité de refoulement de gaz comprimé.

12. Dispositif de palier selon la revendication 8, où l'unité de mesure de perte de pression comprend un premier capteur de pression (121) pour la détection de la pression du gaz comprimé sortant de l'unité de refoulement de gaz comprimé (80) et un deuxième capteur de pression (122) pour la détection de la pression du gaz comprimé entre l'élément d'étranglement (72) et l'unité de détection de déplacement, et l'unité de mesure de perte de pression détecte la pression différentielle par soustraction d'une valeur de détection de pression du deuxième capteur de pression d'une valeur de détection de pression du premier capteur de pression.

13. Dispositif de palier selon l'une des revendications 8 à 12 comprenant une unité de traitement arithmétique (PU) pour le calcul d'une charge axiale exercée sur l'élément rotatif sur la base de la pression différentielle détectée par l'unité de mesure de perte de pression.

14. Dispositif de palier selon l'une des revendications 1 à 3, comprenant en outre une unité d'alimentation en lubrifiant (119) pour l'alimentation en lubrifiant du palier à roulement avec un deuxième gaz comprimé différent du gaz comprimé refoulé pour la mesure de déplacement, et
où au moins un évidement (120) où s'écoule le deuxième gaz comprimé est formé dans la pièce d'espacement de bague extérieure entre la buse d'injection de gaz comprimé et le palier à roulement.

15. Dispositif de palier selon la revendication 14, où chacun desdits au moins un évidement (120) est une partie de réduction de pression pour la réduction de pression du deuxième gaz comprimé.

16. Dispositif de palier selon la revendication 14 ou la revendication 15, où ledit au moins un évidement (125) sert comme ladite au moins une rainure de récupération de gaz.

17. Dispositif de palier selon l'une des revendications 14 à 16, où l'unité d'alimentation en lubrifiant est pourvue d'une buse d'injection de lubrifiant (124) s'ouvrant sur ledit au moins un évidement formé dans la pièce d'espacement de bague extérieure, et injecte le lubrifiant vers ledit au moins un évidement avec le deuxième gaz comprimé.

18. Dispositif de palier selon l'une des revendications 14 à 17, où ledit dispositif de palier comprend une cavité (86) formée dans la pièce d'espacement de bague extérieure et raccordée à une partie d'évacuation de gaz comprimé (87a, 87b) pour l'évacuation vers l'extérieur du gaz comprimé refoulé pour la mesure de déplacement, et où,
si ladite au moins une rainure de récupération de gaz comprend deux rainures de récupération de gaz formées sur les deux côtés de la buse d'injection de gaz comprimé, la cavité communique avec au moins une des deux rainures de récupération de gaz.

19. Dispositif de palier selon l'une des revendications 13 à 18, où le palier à roulement comprend une bague intérieure (34), une bague extérieure (33), et une pluralité d'éléments de roulement (35) disposés de manière rotative entre la bague intérieure et la bague extérieure, et
la bague intérieure est de dimension supérieure à la bague extérieure dans la direction axiale de l'élément rotatif, et la bague intérieure présente une partie dont le diamètre augmente dans la direction des éléments de roulement.

20. Appareil à broche de machine-outil (10), comprenant un dispositif de palier selon l'une des revendications 1 à 19, ledit appareil à broche de machine-outil recourant au dispositif de palier pour supporter de manière rotative un arbre principal (21) en tant qu'élément rotatif, et mesurant une charge axiale exercée sur l'arbre principal.
